# EUROPÄISCHE PATENTSCHRIFT

(11) **EP 2 577 108 B1**
(45) Veröffentlichungstag und Bekanntmachung des Hinweises auf die Patenterteilung: **06.12.2017**
(21) Anmeldenummer: 11713296.9
(22) Anmeldetag: 11.04.2011
(51) Int. Cl.: F16H 45/02, F16F 15/12, F16F 15/131, F16F 15/14

(54) **DREHSCHWINGUNGSDÄMPFUNGSANORDNUNG**
HYDRODYNAMIC COUPLING DEVICE
APPAREIL HYDRODYNAMIQUE DE COUPLAGE

(30) Priorität: 25.05.2010 DE 102010029255
(43) Veröffentlichungstag der Anmeldung: 10.04.2013
(73) Patentinhaber: ZF Friedrichshafen AG, 88046 Friedrichshafen (DE)
(72) Erfinder: LORENZ, Daniel, 97688 Bad Kissingen (DE); WEIGAND, Thomas, 97421 Schweinfurt (DE); CARLSON, Cora, 97456 Dittelbrunn (DE)
(86) Internationale Anmeldenummer: PCT/EP2011/055601
(87) Internationale Veröffentlichungsnummer: WO 2011/147633

(56) Entgegenhaltungen:
- DE-A1- 19 835 758
- DE-A1- 19 943 038
- DE-A1-102009 035 914
- GB-A- 2 346 194
- US-A1- 2002 033 310
- US-B1- 6 231 472

## Beschreibung

Die vorliegende Erfindung betrifft eine Drehschwingungsdämpfungsanordnung, wie sie beispielsweise im Antriebsstrang eines Fahrzeugs eingesetzt werden kann, um Drehungleichförmigkeiten zu dämpfen bzw. so weit als möglich zu eliminieren.

Vor allem bei mit Brennkraftmaschinen aufgebauten Antriebssträngen kann bedingt dadurch, dass in Brennkraftmaschinen periodisch Zündungen auftreten und die dabei freigesetzte Energie in eine Drehbewegung der Kurbelwelle umgesetzt wird, grundsätzlich kein konstantes Drehmoment in einen Antriebsstrang eingeleitet werden. Sowohl das von der Kurbelwelle abgegebene Drehmoment, als auch deren Drehzahl unterliegt Schwankungen bzw. Schwingungen, allgemein Drehungleichförmigkeiten. Da derartige Drehungleichförmigkeiten im Fahrbetrieb spürbar sein können, besteht allgemein die Zielsetzung, diese so weit als möglich zu eliminieren.

Beispielsweise ist es bekannt, durch den Einsatz von Kraft- bzw. Energiespeichern, also beispielsweise Federn oder sich bewegende Massen oder Kombinationen daraus, die bei derartigen Drehungleichförmigkeiten auftretenden Energien vorübergehend zu speichern und sie dann so in den Antriebsstrang weiterzugeben, dass ein geglätteter Drehzahl- bzw. Drehmomentenverlauf erreicht werden kann. So genannte Zweimassenschwungräder sind ein Beispiel von in diesem Sinne arbeitenden Drehschwingungsdämpfungsanordnungen. Als Tilger bekannte Massenpendel setzen die im Fahrzustand auftretenden Drehungleichförmigkeiten in oszillierende Auslenkungen von Schwingungsmassen um, wobei die Auslenkung entgegen der Fliehkraft erfolgt und durch Vorgabe der Auslenkungsbahn bzw. auch der auszulenkenden Massen eine Abstimmung auf bestimmte Anregungsdrehzahlen bzw. Anregungsfrequenzen erreicht werden kann. Derartige Tilger können selbstverständlich mit durch Einsatz von Federn oder dergleichen schwingenden Massensystemen kombiniert werden.

Auf Grund der im modernen Fahrzeugbau immer beengter werdenden Platzverhältnisse steht auch für die zur Schwingungsdämpfung eingesetzten Systeme weniger Bauraum mit entsprechenden Einbußen in der Entkopplungsgüte, also der Verringerung der auftretenden Drehungleichförmigkeiten, zur Verfügung.

Eine Drehschwingungsdämpfungsanordnung gemäß dem Oberbegriff des Anspruchs 1 ist aus der GB 2 346 194 A bekannt. Bei dieser bekannten Drehschwingungsdämpfungsanordnung wird das über diese zu übertragende Drehmoment über eine als Eingangsbereich wirksame Schwungmasse eingeleitet und von dieser Schwungmasse zu einer als Ausgangsbereich wirksamen Schwungmasse weitergeleitet. Zwischen der als Eingangsbereich wirksamen Schwungmasse und der als Ausgangsbereich wirksamen Schwungmasse ist ein Drehmomentübertragungsweg mit einer darin angeordneten Federeinrichtung vorgesehen. Mit der als Ausgangsbereich wirksamen Schwungmasse ist ein Hohlrad gekoppelt, mit welchem eine Mehrzahl von an einem frei drehbaren Planetenradträger drehbar getragenen Planetenrädern in Eingriff steht. Ferner steht ein mit der als Eingangsbereich wirksamen Schwungmasse gekoppeltes Sonnenrad in Eingriff mit den Planetenrädern. Bei Kompression der Federn der Federeinrichtung im Drehmomentübertragungsweg zwischen den beiden Schwungmassen, also zwischen dem Eingangsbereich und dem Ausgangsbereich, wird eine Relativdrehung zwischen dem Hohlrad und dem Sonnenrad erzeugt, wodurch die Planetenräder in Drehung versetzt werden und am Außenumfang des Sonnenrades bzw. am Innenumfang des Hohlrades abrollen. Dadurch wird der als Zwischenmasse wirksame Planetenradträger in Drehung versetzt.

Es ist die Aufgabe der vorliegenden Erfindung, eine Drehschwingungsdämpfungsanordnung bereitzustellen, welche bei kompakter Baugröße eine verbesserte Verringerung von in einen Antriebsstrang eingeleiteten Drehungleichförmigkeiten erreicht.

Erfindungsgemäß wird diese Aufgabe gelöst durch eine Drehschwingungsdämpfungsanordnung, insbesondere für den Antriebsstrang eines Fahrzeugs, gemäß Anspruch 1. Diese umfasst einen zur Drehung um eine Drehachse anzutreibenden Eingangsbereich und einen Ausgangsbereich, wobei zwischen dem Eingangsbereich und dem Ausgangsbereich ein erster Drehmomentübertragungsweg und parallel dazu ein zweiter Drehmomentübertragungsweg sowie eine Koppelanordnung zur Zusammenleitung bzw. Überlagerung der über die Drehmomentübertragungswege geleiteten bzw. auftretenden Drehmomente vorgesehen sind, wobei im ersten Drehmomentübertragungsweg eine erste Phasenschieberanordnung zur Erzeugung einer Phasenverschiebung von über den ersten Drehmomentübertragungsweg geleiteten Drehungleichförmigkeiten bezüglich über den zweiten Drehmomentübertragungsweg geleiteten Drehungleichförmigkeiten vorgesehen ist.

Bei der erfindungsgemäßen Drehschwingungsdämpfungsanordnung wird durch Einsatz der Phasenschieberanordnung dafür gesorgt, dass zunächst durch Aufteilung und dann wieder Zusammenführung des übertragenen Drehmoments durch die dabei eingeführte Phasenverschiebung eine destruktive Überlagerung von Schwingungsanteilen in dem zu übertragenden Drehmoment auftritt. Im Idealfalle findet zumindest in einem besonders kritisehen Frequenzbereich eine nahezu vollständige Eliminierung der Drehungleichförmigkeiten statt.

Um diese Phasenverschiebung bei baulich einfacher Weise effizient erreichen zu können, wird vorgeschlagen, dass die erste Phasenschieberanordnung ein erstes Schwingungssystem mit einer Primärseite und einer gegen die Wirkung einer Federanordnung bezüglich der Primärseite um die Drehachse drehbaren Sekundärseite umfasst.

Die erste Phasenschieberanordnung ist somit im Wesentlichen nach dem Funktionsprinzip eines Zweimassenschwingers aufgebaut, bei welchem zwei gegen die Wirkung der Federanordnung bezüglich einander schwingende Massen, also im Wesentlichen die Primärseite und die Sekundärseite, durch Auswahl der Federsteifigkeit einerseits und der Massenverhältnisse bzw. der Massenträgheit an der Primärseite und der Sekundärseite andererseits mit einem gewünschten Schwingungsverhalten bereitgestellt werden. Charakteristisch ist, dass ein derartiges Schwingungssystem eine Resonanzfrequenz aufweist. Im Frequenzbereich unter der Resonanzfrequenz schwingt ein derartiges Schwingungssystem unterkritisch, d.h. Anregung und Reaktion des Systems treten im Wesentlichen gleichzeitig auf. Mit Überschreiten der Resonanzfrequenz tritt ein Phasensprung auf, so dass im Wesentlichen Anregung und Reaktion des Systems zueinander phasenverschoben auftreten, das System also überkritisch arbeitet. Diesen Phasensprung, der im Idealfalle bei einem Maximalwert von 180° liegt, nutzt die vorliegende Erfindung, um durch Überlagerung des so phasenverschobenen Drehmomentenschwingungsanteils mit dem nicht phasenverschobenen Drehmomentenschwingungsanteil die gewünschte Minderung der Drehungleichförmigkeiten zu erreichen.

Vorteilhafterweise kann weiter im zweiten Drehmomentübertragungsweg eine zweite Phasenschieberanordnung vorgesehen sein. Auch diese zweite Phasenschieberanordnung kann ein zweites Schwingungssystem mit einer Primärseite und einer gegen die Wirkung einer Federanordnung bezüglich der Primärseite um die Drehachse drehbaren Sekundärseite umfassen.

Um sicherzustellen, dass dann, wenn in beiden Drehmomentübertragungswegen mit einer Phasenschieberanordnung gearbeitet wird, eine angestrebte Minderung der Drehungleichförmigkeiten erreicht wird, wird vorgeschlagen, dass das erste Schwingungungssystem und das zweite Schwingungssystem zueinander unterschiedliche Resonanzfrequenzen aufweisen. Auf diese Art und Weise kann ein Frequenz- bzw. auch Drehzahlbereich definiert werden, in welchem einer der beiden Drehmomentübertragungswege bereits überkritisch arbeitet, während der andere noch unterkritisch, also ohne Phasenverschiebung arbeitet.

Vorzugsweise ist dabei vorgesehen, dass die Resonanzfrequenz des ersten Schwingungssystems unter der Resonanzfrequenz des zweiten Schwingungssystems liegt.

Um das Dämpfungsverhalten weiter beeinflussen zu können, wird vorgeschlagen, dass der erste Drehmomentübertragungsweg oder und der zweite Drehmomentübertragungsweg mit einer Reibungsdämpfungsanordnung oder/und einer Fluiddämpfungsanordnung für über diesen Drehmomentübertragungsweg geleitete Drehungleichförmigkeiten ausgebildet ist.

Es ist selbstverständlich, dass hier die beiden Drehmomentübertragungswege unterschiedlich ausgebildet sein können, also jeder der beiden Drehmomentübertragungswege mit oder ohne den einen oder den anderen zusätzlichen Dämpfungsaspekt aufgebaut sein kann.

Insbesondere dann, wenn bei einem oder beiden der Drehmomentübertragungswege Reibungsdämpfung und Fluiddämpfung zusätzlich vorgesehen sein sollen, kann je nachdem, in welcher Art und Weise diese das Dämpfungsverhalten beeinflussen sollen, eine parallele oder eine serielle Wirksamkeit derselben vorgesehen sein. Auch hier können beide Drehmomentübertragungswege wieder unterschiedlich zueinander ausgestaltet sein.

Weiter kann eine Diversifizierung des Dämpfungsverhaltens dadurch erlangt werden, dass die Reibungsdämpfungsanordnung oder/und die Fluiddämpfungsanordnung zu der Federanordnung parallel oder seriell wirkend angeordnet ist.

Bei einer auf Grund der kompakten Baugröße besonders vorteilhaften Variante wird vorgeschlagen, dass die Koppelanordnung eine Planetengetriebeanordnung umfasst.

Dabei kann der Aufbau beispielsweise derart sein, dass die Planetengetriebeanordnung einen an den zweiten Drehmomentübertragungsweg angebundenen Planetenradträger mit einer Mehrzahl von daran drehbar getragenen Planetenrädern umfasst.

Dies bedeutet also, dass das in den zweiten Drehmomentübertragungsweg eingeleitete Drehmoment vom Planetenradträger aufgenommen und über die an diesem drehbar getragenen Planetenräder dann zum Ausgangsbereich weitergeleitet wird.

Um die vorangehend bereits angesprochene Kopplung der beiden Drehmomentenanteile auch im Sinne einer destruktiven Überlagerung in einfacher Weise realisieren zu können, wird weiter vorgeschlagen, dass die Planetengetriebeanordnung eine an den ersten Drehmomentübertragungsweg angebundene erste Hohlradanordnung in Kämmeingriff mit den Planetenrädern und eine an den Ausgangsbereich angebundene zweite Hohlradanordnung in Kämmeingriff mit den Planetenrädern umfasst.

Bei einer alternativen, vor allem im radial inneren Bereich vorhandenen Bauraum nutzenden Ausgestaltungsform wird vorgeschlagen, dass Planetengetriebeanordnung eine an den ersten Drehmomentübertragungsweg angebundene erste Sonnenradanordnung in Kämmeingriff mit den Planetenrädern und eine an den Ausgangsbereich angebundene zweite Sonnenradanordnung in Kämmeingriff mit den Planetenrädern umfasst.

Das Verhalten, mit welchem Drehungleichförmigkeiten in dem zu übertragenden Drehmoment eliminiert werden können, kann weiter dadurch beeinflusst werden, dass die in die beiden Drehmomentübertragungswege einzuleitenden bzw. von diesen übertragenen Drehmomentenanteile in ihrer Größe beeinflusst werden. Beispielsweise kann vorgesehen sein, dass die erste Hohlradanordnung oder Sonnenradanordnung in Verbindung mit den Planetenrädern und die zweite Hohlradanordnung oder Sonnenradanordnung in Verbindung mit den Planetenrädern zueinander unterschiedliche Übersetzungsverhältnisse bereitstellen. Durch die Auswahl der einander nicht gleichen Übersetzungsverhältnisse wird es möglich, einen größeren Drehmomentenanteil über den ersten oder auch den zweiten Drehmomentübertragungsweg zu leiten.

Da die als Kopplungsanordnung wirksame Planetengetriebeanordnung nur in einem vergleichsweise kleinen, durch die Phasenschieberanordnung bzw. deren Schwingungssystem zugelassenen Winkelbereich wirksam ist, kann weiter vorgesehen sein, dass wenigstens ein Planetenrad oder/und die Hohlradanordnung oder/und die Sonnenradanordnung segmentzahnradartig ausgebildet ist.

Eine zum Vermeiden von Unwuchten besonders vorteilhafte Ausgestaltungsvariante kann vorsehen, dass die Planetenräder mit im Wesentlichen gleichmäßigem Umfangsabstand zueinander angeordnet sind. Alternativ ist es möglich, dass die Planetenräder mit ungleichmäßigem Umfangsabstand zueinander angeordnet sind. Durch die Variation der Umfangsabstände der Planetenräder wird es möglich, deren Geräuschentwicklung zu beeinflussen und mithin einen ruhigeren Lauf zu erlangen.

Wenn vorgesehen ist, dass die Kopplungsanordnung radial innerhalb der ersten Phasenschieberanordnung oder/und der zweiten Phasenschieberanordnung und sich damit wenigstens teilweise axial überlappend angeordnet ist, wird vor allem der radial innere Bauraum effizient genutzt.

Alternativ kann vorgesehen sein, dass die Kopplungsanordnung axial neben der ersten Phasenschieberanordnung oder/und der zweiten Phasenschieberanordnung angeordnet ist. Bei dieser Ausgestaltung wird es möglich, die Kopplungsanordnung axial vergleichsweise groß bauend, also mit größeren Wirkradien, zu gestalten.

Eine besonders effiziente Überlagerung der über die beiden Drehmomentübertragungswege übertragenen Schwingungsanteile kann erreicht werden, wenn der zweite Drehmomentübertragungsweg eine Steifigkeit von wenigstens 800 Nm/°, vorzugsweise wenigstens 1500 Nm/°, aufweist. Dies bedeutet, dass der zweite Drehmomentübertragungsweg bzw. die diesen bereitstellenden Bauteile bzw. Baugruppen vergleichsweise steif sind und eine zur Phasenverschiebung führende Elastizität im Wesentlichen nur im ersten Drehmomentübertragungsweg genutzt wird.

Weiter hat sich gezeigt, dass die Schwingungsdämpfungscharakteristik dann besonders vorteilhaft ausgeprägt ist, wenn ein Verhältnis eines Massenträgheitsmomentes des Eingangsbereichs zu einem Massenträgheitsmoment im ersten Drehmomentübertragungsweg im Bereich von 1 bis 10 liegt oder/und wenn ein Verhältnis eines Massenträgheitsmoments im ersten Drehmomentübertragungsweg zu einem Massenträgheitsmoment im zweiten Drehmomentübertragungsweg im Bereich von 2 bis 20 liegt.

Die vorliegende Erfindung betrifft ferner ein Hybridantriebsmodul sowie eine hydrodynamische Kupplungsanordnung, insbesondere hydrodynamischer Drehmomentwandler, mit einer erfindungsgemäßen Drehschwingungsdämpfungsanordnung.

Ferner betrifft die vorliegende Erfindung ein Antriebssystem für ein Fahrzeug, umfassend ein Antriebsaggregat und eine erfindungsgemäße Drehschwingungsdämpfungsanordnung, wobei der Eingangsbereich derselben an eine Antriebswelle des Antriebsaggregats angekoppelt sein kann.

Bei einem derartigen Antriebssystem wird vorteilhafterweise dafür gesorgt, dass eine Resonanzstelle des ersten Schwingungssystems unter oder nahe der Leerlaufdrehzahl des Antriebsaggregats ist. Mit dieser Resonanzstelle, also die in eine Drehzahl umgesetzte Resonanzfrequenz des ersten Schwingungssystems, wird dafür gesorgt, dass praktisch im gesamten Drehzahlspektrum die durch das Auftreten des Phasensprungs im Bereich der Resonanzstelle eingeführte Phasenverschiebung und daraus resultierende Überlagerung phasenverschobener Schwingungsanteile genutzt werden kann.

Weiter kann vorgesehen sein, dass eine Resonanzstelle des zweiten Schwingungssystems über oder nahe der maximalen Drehzahl des Antriebsaggregats ist.

Die vorliegende Erfindung wird nachfolgend mit Bezug auf die beiliegenden Figuren detailliert beschrieben. Es zeigt:
- Fig. 1: eine prinzipartige Darstellung eines Drehschwingungsdämpfungssystems mit zwei parallelen Drehmomentübertragungswegen;
- Fig. 2: eine der Fig. 1 entsprechende Darstellung einer alternativen Ausgestaltung;
- Fig. 3: eine der Fig. 1 entsprechende Darstellung einer alternativen Ausgestaltung;
- Fig. 4: eine Teil-Längsschnittansicht einer Drehschwingungsdämpfungsanordnung mit zwei parallelen Drehmomentübertragungswegen;
- Fig. 5: eine der Fig. 4 entsprechende Darstellung einer alternativen Ausgestaltung;
- Fig. 6: eine Darstellung von an einem Planetenradträger drehbar getragenen Segment-Planetenrädern;
- Fig. 7: eine der Fig. 4 entsprechende Darstellung einer alternativen Ausgestaltung;
- Fig. 8: eine der Fig. 4 entsprechende Darstellung einer alternativen Ausgestaltung;
- Fig. 9: eine Axialansicht einer Fluiddämpfungsanordnung;
- Fig. 10: in ihren Darstellungen a), b) und c) alternative Ausgestaltungsarten eines Planetenrades mit dazugehörigen Hohlrädern;
- Fig. 11: ein Hybridantriebsmodul mit einer Drehschwingungsdämpfungsanordnung mit zwei parallelen Drehmomentübertragungswegen;
- Fig. 12: einen hydrodynamischen Drehmomentwandler mit einer Drehschwingungsdämpfungsanordnung mit zwei parallelen Drehmomentübertragungswegen;
- Fig. 13: eine weitere prinzipartige Darstellung einer Drehschwingungsdämpfungsanordnung mit zwei parallelen Drehmomentübertragungswegen ;
- Fig. 14: eine der Fig. 13 entsprechende Darstellung einer alternativen Ausgestaltung;
- Fig. 15: eine der Fig. 13 entsprechende Darstellung einer alternativen Ausgestaltung;
- Fig. 16: eine der Fig. 13 entsprechende Darstellung einer alternativen Ausgestaltung;
- Fig. 17: eine der Fig. 13 entsprechende Darstellung einer alternativen Ausgestaltung;
- Fig. 18: eine der Fig. 13 entsprechende Darstellung einer alternativen Ausgestaltung;
- Fig. 19: eine der Fig. 13 entsprechende Darstellung einer alternativen Ausgestaltung;
- Fig. 20: eine der Fig. 13 entsprechende Darstellung einer alternativen Ausgestaltung;
- Fig. 21: eine der Fig. 13 entsprechende Darstellung einer alternativen Ausgestaltung;
- Fig. 22: eine tabellarische Auflistung verschiedener Größen bzw. Verhältnisse von Größen und zugeordneten Werten bzw. Wertebereichen;
- Fig. 23: eine Teil-Längsschnittansicht einer alternativ austestalteten Drehschwingungsdämpfungsanordnung;
- Fig. 24: eine prinzipartige Darstellung eines Drehschwingungsdämpfungssystems mit einer mit Sonnenradanordnungen ausgebildeten Kopplungsanordnung;
- Fig. 25: eine Teil-Längsschnittansicht einer Drehschwingungsdämpfungsanordnung mit Sonnenradanordnungen,
- Fig. 26: eine Detailansicht eines an einem Planetenradträger drehbar getragenen Planetenrads;
- Fig. 27: einen Stützring zur Stabilisierung der am Planetenradträger getragenen Planetenräder in Axialansicht;
- Fig. 28: den Stützring der Fig. 27 in perspektivischer Ansicht;
- Fig. 29: eine Teil-Axialansicht einer mit Hohlradsegmenten ausgebildeten Hohlradanordnung;
- Fig. 30: eine Teil-Längsschnittansicht einer Drehschwingungsdämpfungsanordnung mit zwei parallelen Drehmomentübertragungswegen;
- Fig. 31: die Drehschwingungsdämpfungsanordnung der Fig. 30 in einem anderen Umfangsbereich geschnitten;
- Fig. 32: die Drehschwingungsdämpfungsanordnung der Fig. 30 und 31 in geschnittener Explosionsdarstellung.

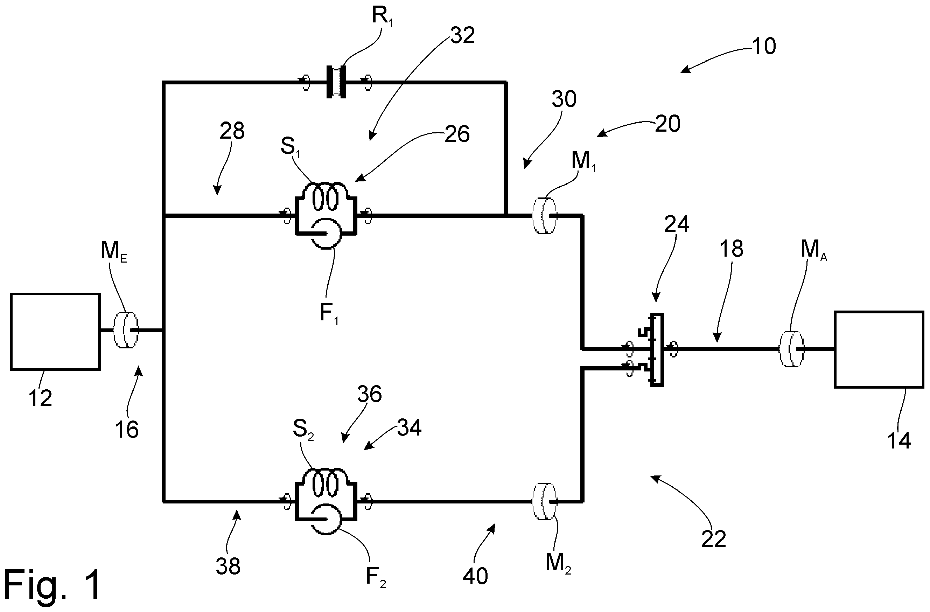

In Fig. 1 ist eine im Antriebsstrang eines Fahrzeugs vorgesehene Drehschwingungsdämpfungsanordnung 10 in prinzipartiger Weise dargestellt. Die Drehschwingungsdämpfungsanordnung 10 überträgt ein Drehmoment zwischen einem nur schematisch dargestellten Antriebsaggregat 12, beispielsweise einer Brennkraftmaschine, und einem Getriebe 14 oder sonstigen Systembereichen eines Antriebsstrangs.

Das über die Drehschwingungsdämpfungsanordnung 10 zu übertragende Drehmoment wird in einem allgemein mit 16 bezeichneten Eingangsbereich aufgenommen, wobei dem Eingangsbereich eine Massenträgheit bzw. ein Massenträgheitsmoment M_{E} zugeordnet werden kann. Das über die Drehschwingungsdämpfungsanordnung 10 geleitete Drehmoment wird über einen Ausgangsbereich 18 abgegeben, wobei dem Ausgangsbereich 18 eine Massenträgheit bzw. ein Massenträgheitsmoment M_{A} zugeordnet werden kann.

Zwischen dem Eingangsbereich 16 und dem Ausgangsbereich 18 wird das zu übertragende Drehmoment aufgeteilt in zwei Drehmomentenanteile. Ein erster der Drehmomentenanteile wird über einen ersten Drehmomentübertragungsweg 20 übertragen, während der zweite der Drehmomentenanteile über einen zweiten Drehmomentübertragungsweg 22 übertragen wird. Eine Vereinigung bzw. Zusammenkoppelung der beiden Drehmomentenanteile erfolgt in einer Koppelanordnung 24, die die beiden Drehmomentenanteile aufnimmt und dann in Richtung zum Ausgangsbereich 18 weiterleitet.

Um die beispielsweise im Bereich des Antriebsaggregats 12 generierten Drehungleichförmigkeiten, welche im Allgemeinen Schwingungscharakter aufweisen, so weit als möglich zu eliminieren und nicht in Richtung zum Getriebe 14 hin oder sonstigen Antriebsstrangkomponenten weiter zu leiten, ist bei der erfindungsgemäßen Drehschwingungsdämpfungsanordnung 10 dafür gesorgt, dass die Schwingungsanteile in dem zu übertragenden Drehmoment in den beiden Drehmomentübertragungswegen 20, 22 zueinander eine Phasenverschiebung erfahren. Zu diesem Zwecke ist im ersten Drehmomentübertragungsweg 20 eine erste Phasenschieberanordnung 26 vorgesehen. Diese erste Phasenschieberanordnung 26 ist als erstes Schwingungssystem 32 aufgebaut, bei welchem zwei Massen gegen die Wirkung einer Federanordnung bezüglich einander schwingen können. Diese Federanordnung weist eine vorbestimmte Steifigkeit bzw. Federkonstante S₁ auf. Die beiden gegeneinander schwingenden Massen sind im Wesentlichen durch eine Primärseite 28 und eine Sekundärseite 30 dieses Schwingungssystems 32 definiert. Die Masse bzw. das Massenträgheitsmoment der Primärseite 28 entspricht im Wesentlichen der Massenträgheit M_{E} des Eingangsbereichs 16. Die Sekundärseite 30 weist eine Massenträgheit bzw. ein Massenträgheitsmoment M₁ auf. Bestimmt durch die Steifigkeit bzw. Federkonstante S₁ und die beiden Massen bzw. Massenträgheiten M_{E} und M₁ ergibt sich für das Schwingungssystem 32 im ersten Drehmomentübertragungsweg 20 eine Resonanzfrequenz. Bei Schwingungsanregung mit einer unter der Resonanzfrequenz liegenden Frequenz arbeitet dieses Schwingungssystem 32 unterkritisch, was bedeutet, dass Anregung und Reaktion im Wesentlichen gleichzeitig, also ohne gegenseitige Phasenverschiebung auftreten. Mit Überschreiten der Resonanzfrequenz geht das Schwingungssystem 32 in einen überkritischen Zustand über, in welchem Anregung und Reaktion zueinander phasenverschoben laufen, was im Wesentlichen einen Phasensprung von maximal 180° bedeutet. Dies bedeutet, dass Schwingungsanteile, welche in dem über den ersten Drehmomentübertragungsweg 20 zu übertragenden Drehmomentenanteil enthalten sind, dann, wenn die Anregungsfrquenz über der Resonanzfrequenz des Schwingungssystems 32 liegt, um maximal 180° phasenverschoben in Richtung zur Koppelanordnung 24 weitergeleitet werden.

Es ist darauf hinzuweisen, dass die Güte des Phasensprungs, also die Größe der erzeugten Phasenverschiebung, von verschiedenen Bedingungen, insbesondere auch den im Bereich des Schwingungssystems 32 auftretenden Reibeffekten abhängen wird, während die Lage des Übergangs durch die Resonanzfrequenz des Schwingungssystems 32 definiert ist.

Um das Dämpfungsverhalten bei Drehmomentübertragung über den ersten Drehmomentübertragungsweg 20 weiter beeinflussen zu können, können in diesem ersten Drehmomentübertragungsweg 20 weiter eine Reibungsdämpfungsanordnung R₁ sowie eine Fluiddämpfungsanordnung F₁ vorgesehen sein. In dem in Fig. 1 dargestellten Beispiel liegen diese beiden Dämpfungsanordnungen R₁, F₁ wirkungsmäßig zueinander und auch zur Federanordnung 26 des Schwingungssystems 32 parallel. Während die Reibungsdämpfungsanordnung R₁ im Allgemeinen mit coulombscher Reibung, also gegeneinander gleitreibend verschiebbaren Bauteilen arbeitet, kann die Fluiddämpfungsanordnung F₁ durch das Verdrängen eines viskosen Mediums, also beispielsweise Öl oder Fett, bei Relativdrehung zwischen der Primärseite 28 und der Sekundärseite 30 wirksam sein.

In dem in Fig. 1 dargestellten Beispiel einer Drehschwingungsdämpfungsanordnung 10 ist auch dem zweiten Drehmomentübertragungsweg 22 eine zweite Phasenschieberanordnung 34 zugeordnet. Auch diese umfasst ein zweites Schwingungssystem 36 mit gegen die Wirkung einer Federanordnung, hier repräsentiert durch eine Steifigkeit bzw. Federkonstante S₂, bezüglich einander verdrehbarer Primärseite 38 und Sekundärseite 40. Das Schwingungsverhalten dieses Schwingungssystems 36 ist also neben der Steifigkeit bzw. Federkonstante S₂ im Wesentlichen bestimmt durch die bezüglich einander schwingenden Massen bzw. Massenträgheiten M_{E} des Eingangsbereichs 16 bzw. M₂ der Sekundärseite 40. Weiter erkennt man auch in Zuordnung zu der Phasenschieberanordnung 34 eine zur Steifigkeit S₂ parallel geschaltete Fluiddämpfungsanordnung F₂. Selbstverständlich könnte auch eine Reibdämpfungsanordnung vorgesehen sein, wie sie in Zuordnung zum ersten Drehmomentübertragungsweg 20 erkennbar ist.

Durch die Auswahl der Ausgestaltung der zweiten Phasenschieberanordnung 34 wird es möglich, deren Resonanzfrequenz so zu legen bzw. so auf die Resonanzfrequenz der ersten Phasenschieberanordnung 26 abzustimmen, dass der Phasensprung, also der Übergang in den überkritischen Zustand, bei einer anderen Frequenz und mithin einer anderen Drehzahl auftreten wird. Insbesondere kann, wie nachfolgend noch anhand konstruktiver Ausgestaltungen aufgezeigt, die Steifigkeit S₂ der zweiten Phasenschieberanordnung derart gewählt werden, dass die Resonanzfrequenz der zweiten Phasenschieberanordnung 34 in einem Bereich liegt, welcher außerhalb des im Antriebsstrang auftretenden Anregungsspektrums liegt. Dies bedeutet, dass die zweite Phasenschieberanordnung 34 bzw. das Schwingungssystem 36 derselben in dem in einem normalen Fahrzustand zu erwartenden Anregungsspektrum nicht in einen überkritischen Zustand übergehen wird. Die Folge davon ist, dass die im Bereich der Koppelanordnung 24 wieder zusammengeführten Drehmomentenanteile hinsichtlich der darin enthaltenen Schwingungsanteile im Idealfalle eine Phasenverschiebung von 180°aufweisen, so dass eine Überlagerung im Sinne einer destruktiven Interferenz erzeugt wird. Die Folge davon ist, dass am Ausgangsbereich 18 nur vergleichsweise geringe Schwingungsanteile verbleiben, die dann in Richtung Antriebsstrang weitergeleitet werden können.

Dabei ist insbesondere zu betonen, dass derartige Schwingungssysteme 32 bzw. 36, die grundsätzlich nach Art eines Zweimassenschwungrads aufgebaut sind, nach Art eines Tiefpassfilters arbeiten, also höherfrequente Schwingungsanteile im Wesentlichen herausfiltern. Ist einer der Drehmomentübertragungswege, beispielsweise der zweite Drehmomentübertragungsweg 22, dann ohne derartige Filterungsfunktionalität ausgestaltet, bedeutet dies, dass an der Koppelanordnung 24 zwar die niederfrequenten Schwingungsanteile einander destruktiv überlagert werden können, die hochfrequenten Schwingungsanteile jedoch nur noch über einen der Drehmomentübertragungswege übertragen werden und somit eine destruktive Überlagerung nicht möglich ist. Grundsätzlich sind jedoch in einem Antriebsstrang die niederfrequenten Anregungsanteile diejenigen, die für Fahrzeuginsassen spürbar sind bzw. zu einer übermäßig hohen Belastung von Antriebsstrangkomponenten führen und somit zu bedämpfen bzw. eliminieren sind.

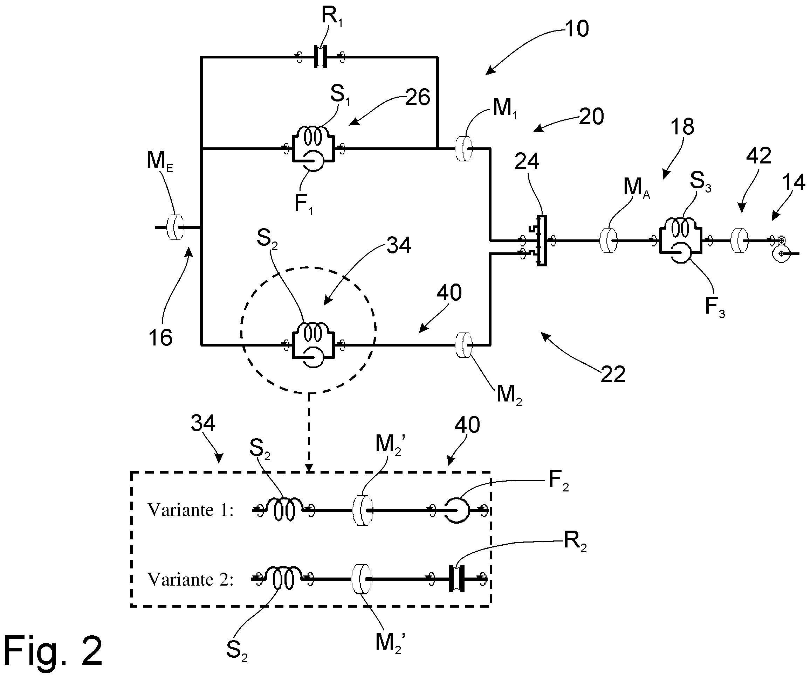

Die Fig. 2 veranschaulicht verschiedene Abwandlungen der in Fig. 1 dargestellten Drehschwingungsdämpfungsanordnung 10. Zunächst erkennt man in Fig. 2, dass folgend auf den Ausgangsbereich 18 ein weiteres Schwingungssystem 42, beispielsweise bereitgestellt in einer Kupplungsscheibe, mit einer Steifigkeit S₃ bzw. auch einer Fluiddämpfungsanordnung F₃ vorgesehen sein kann.

Veranschaulicht sind in Fig. 2 auch zwei Varianten für die Ausgestaltung der zweiten Phasenschieberanordnung 34 des zweiten Drehmomentübertragungswegs 22. Man erkennt zunächst bei der Variante 1, dass hier in Serie zur Steifigkeit S₂ an der Sekundärseite 40 eine Fluiddämpfungsanordnung F₂ vorgesehen ist, wobei sich zwischen der Federanordnung, also der Steifigkeit S₂, und der Fluiddämpfungsanordnung F₂ durch die dort liegenden Komponenten ein im Wesentlichen dann auch das Schwingungsverhalten beeinflussendes Massenträgheitsmoment M₂' der Sekundärseite 40 ergibt. Bei der Variante 2 ist an Stelle der in Serie zur Steifigkeit S₂ angeordneten Fluiddämpfungsanordnung nunmehr eine Reibungsdämpfungsanordnung R₂ vorgesehen.

Es ist hier darauf hinzuweisen, dass selbstverständlich auch im ersten Drehmomentübertragungsweg 20 die Reibungsdämpfungsanordnung R₁ und die Fluiddämpfungsanordnung F₁ seriell zur Steifigkeit S₁ geschaltet sein können.

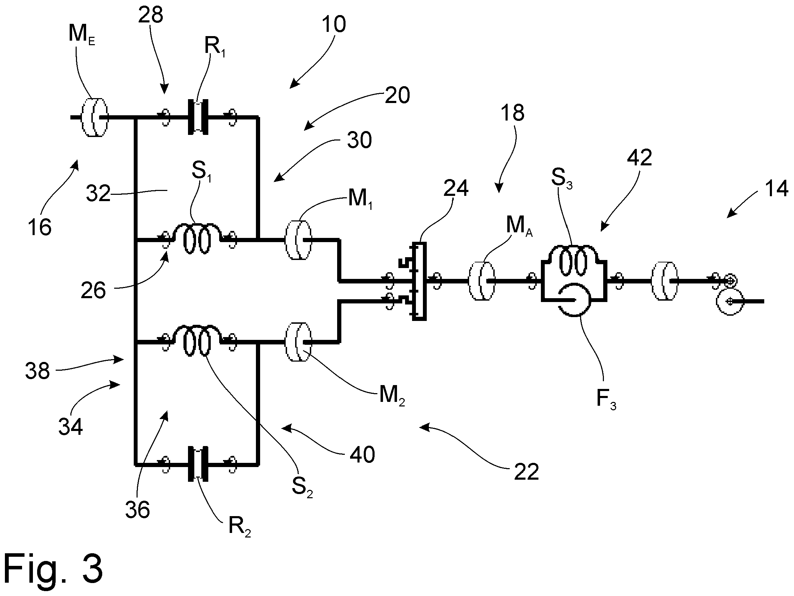

Eine weitere Variante ist in Fig. 3 dargestellt. Man erkennt in beiden Drehmomentübertragungswegen 20, 22 jeweils die bereits erläuterten Phasenschieberanordnungen 26, 34 mit den Steifigkeiten S₁ und S₂ der jeweiligen Schwingungssysteme 32, 36. Ferner erkennt man parallel zu den Steifigkeiten S₁, S₂ jeweils die Reibungsdämpfungsanordnungen R₁ und R₂.

Vorangehend sind mit Bezug auf die Fig. 1 bis 3 verschiedene Variationen prinzipartig dargestellter Drehschwingungsdämpfungsanordnungen erläutert worden, bei welchen jeweils durch das Aufgliedern des zu übertragenden Drehmoments auf zwei Drehmomentübertragungswege und die Erzeugung eines Phasensprungs bzw. einer Phasenverschiebung in zumindest einem der Drehmomentübertragungswege dafür gesorgt wird, dass bei der Zusammenführung der Drehmomentenanteile die über die Drehmomentübertragungswege geleiteten Schwingungsanteile bzw. Drehungleichförmigkeiten einander im Sinne einer gegenseitigen Auslöschung überlagern. Da das Grunddrehmoment, also das an sich zu übertragende, konstante Drehmoment einer Phasenverschiebung nicht unterliegt, werden diese Grunddrehmomentenanteile, die über die beiden Drehmomentübertragungswege geleitet werden, in der Koppelanordnung 24 einander im Sinne einer Addition überlagert, so dass am Ausgangsbereich 18 der Drehschwingungsdämpfungsanordnung 10, etwaige unvermeidbare Reibverluste außer Acht lassend, das vollständige in den Eingangsbereich 16 eingeleitete und zu übertragende Grunddrehmoment abgegriffen bzw. in den folgenden Teil des Antriebsstrangs übertragen werden kann.

Nachfolgend werden verschiedene konstruktive Ausgestaltungsvarianten einer derartigen Drehschwingungsdämpfungsanordnung 10 beschrieben. Es sei darauf hingewiesen, dass im Folgenden Komponenten bzw. Systembereiche, welche vorangehend beschriebenen Komponenten bzw. Systembereichen entsprechen, mit den gleichen Bezugszeichen bezeichnet sind.

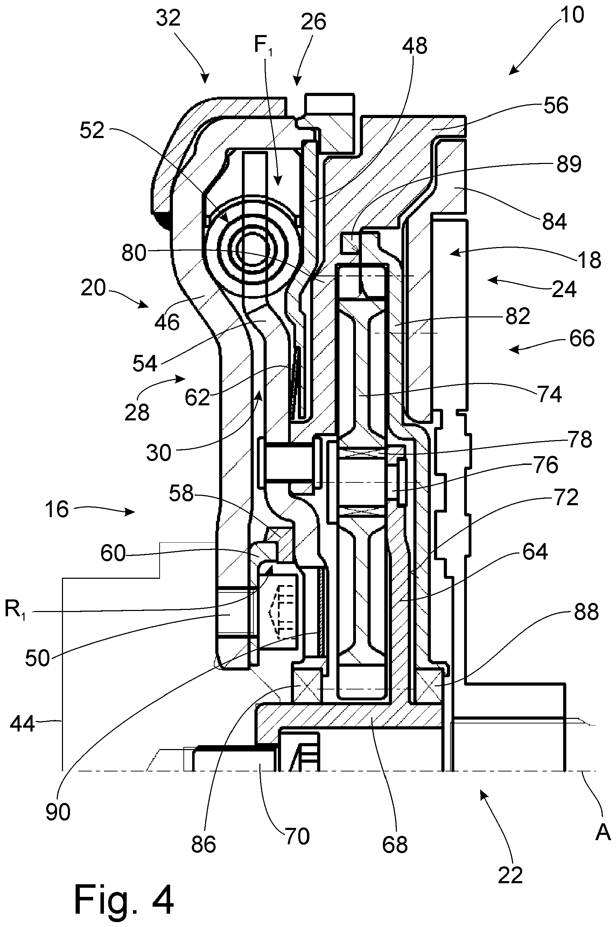

In Fig. 4 ist der Eingangsbereich 16 der Drehschwingungsdämpfungsanordnung 10 an eine Antriebswelle 44, beispielsweise die Kurbelwelle einer Brennkraftmaschine, angebunden bzw. ist zumindest zum Teil auch durch diese bereitgestellt. Die Primärseite 28 des Schwingungssystems 32 im ersten Drehmomentübertragungsweg 20 umfasst zwei Deckscheibenelemente 46, 48. Das Deckscheibenelement 46 ist in seinem radial inneren Bereich durch Schraubbolzen 50 an die Antriebswelle 44 fest angebunden und begrenzt in seinem radial äußeren Bereich mit dem anderen Deckscheibenelement 48 eine Aufnahmekammer für die die Steifigkeit S₁ bereit stellende Dämpferfederanordnung 52. Diese kann, wie dies beispielsweise auch bei Zweimassenschwungrädern oder sonstigen Torsionsschwingungsdämpfern üblich ist, mehrere in Umfangsrichtung aufeinander folgende bzw. auch ineinander geschachtelte Schraubendruckfedern umfassen.

Die Sekundärseite 30 des ersten Schwingungssystems 32 umfasst ein zwischen die beiden Deckscheibenelemente 46, 48 eingreifendes Zentralscheibenelement 54, welches, ebenso wie die Deckscheibenelemente 46, 48, in seinem radial äußeren Bereich Umfangsabstützbereiche für die Federanordnung 52 bereitstellt. In seinem radial innerhalb des Deckscheibenelements 48 liegenden Bereich ist das Zentralscheibenelement 54 mit einem Masseteil 56 beispielsweise durch Vernietung fest verbunden. Radial innerhalb dieser Vernietung stützt sich das Zentralscheibenelement 54 axial an einer Anlaufscheibe bzw. einem Gleitlagerring 58 ab. Dieser ist an einem durch die Schraubbolzen 50 zusammen mit dem Deckscheibenelement 46 an der Antriebswelle 44 festgelegten abgewinkelten Stützelement 60 axial und radial gehalten.

Ein sich am Deckscheibenelement 48 und am Zentralscheibenelement 54 abstützendes Vorspannelement 62, beispielsweise eine Tellerfeder, presst das Zentralscheibenelement 54 in Anlage an der Anlaufscheibe 58. Durch das Vorspannelement 62 einerseits und die Anlaufscheibe 58 andererseits ist der von den beiden Deckscheibenelementen 46, 48 umschlossene Volumenbereich im Wesentlichen fluiddicht gekapselt und kann somit mit einem viskosen Medium gefüllt sein. Dieses viskose Medium wird bei Umfangsrelativbewegung zwischen der Primärseite 28 und der Sekundärseite 30 verdrängt, so dass auf diese Art und Weise die im ersten Drehmomentübertragungsweg 20 vorzusehende Fluiddämpfungsanordnung F₁ realisiert sein kann. Gleichzeitig kann durch den Reibkontakt beispielsweise des Vorspannelements 62 oder aber auch der Anlaufscheibe 58 mit dem Zentralscheibenelement 54 eine coulombsche Reibung, also die Reibungsdämpfungsanordnung R₁ bereitgestellt werden, die bei Relativdrehung zwischen der Primärseite 28 und der Sekundärseite 30 wirksam wird.

Es sei hier darauf hingewiesen, dass sowohl die Reibungsdämpfungsanordnung R₁, als auch die Fluiddämpfungsanordnung F₁ durch andere oder zusätzliche Baugruppen bereitgestellt werden können, die bei Relativdrehung zwischen der Primärseite 28 und der Sekundärseite 30 dämpfend wirksam werden.

Der zweite Drehmomentübertragungsweg 22 umfasst im Wesentlichen einen hinsichtlich seiner Funktionalität nachfolgend noch erläuterten Planetenradträger 64 einer allgemein mit 66 bezeichneten Planetengetriebeanordnung. Diese Planetengetriebeanordnung 66 wiederum stellt im Wesentlichen auch die Koppelanordnung 24 bereit, in welcher die über die beiden Drehmomentübertragungswege 20, 22 geleiteten Drehmomentenanteile wieder zusammengeführt werden.

Radial innen ist der Planetenradträger 64 mit einem zylindrischen Abschnitt 68 ausgebildet. Dieser ist vermittels eines Schraubbolzens 70 zentral an die Antriebswelle 44 angebunden und somit mit dieser zur gemeinsamen Drehung um die Drehachse A verbunden. Man erkennt, dass diese Anbindung hier im Wesentlichen durch Einklemmen, also Erzeugen einer Spannkraft und damit einer Reibungsklemmwirkung erfolgt. Ebenso wie im Falle der Festlegung des Deckscheibenelements 46 ist es auch möglich, hier durch nicht rotationssymmetrische Gestaltung eine Formschlussverbindung zu realisieren und die Schraubverbindung im Wesentlichen nur zur Herstellung des axialen Zusammenhalts zu nutzen.

An den Außenumfang des zylindrischen Abschnitts 68 schließt ein Planetenradträgerabschnitt 72 mit beispielsweise scheibenartiger oder auch armartiger Gestalt an. An diesem Planetenradträgerabschnitt 72 sind an mehreren Umfangspositionen Planetenräder 74 über Tragebolzen 76 und Lagerhülsen 78 drehbar getragen. Die Planetenräder 74 sind bezüglich des Planetenradträgers 64 im Wesentlichen frei drehbar.

In ihrem radial äußeren Bereich stehen die Planetenräder 74 in Kämmeingriff mit einem durch das Masseteil 56 der Sekundärseite 30 des Schwingungssystems 32 bereitgestellten antriebsseitigen Hohlrad 80. Diesem liegt axial gegenüber ein abtriebsseitiges Hohlrad 82, welches, beispielsweise zusammen in Verbindung mit einem ringartigen Reibflächenelement 84 für eine Reibungskupplung im Wesentlichen den Ausgangsbereich 18 der Drehschwingungsdämpfungsanordnung 10 bereitstellt.

Ebenso wie die Sekundärseite 30 des ersten Schwingungssystems 32 kann das abtriebsseitige Hohlrad 82 in seinem radial inneren Bereich über ein jeweiliges Lager 86 bzw. 88 am Außenumfang des zylindrischen Abschnitts 68 des Planetenradträgers 64 drehgelagert und somit bezüglich der Drehachse A zentriert sein. Da das abtriebsseitige Hohlrad 82 bezüglich des antriebsseitigen Hohlrads 80 grundsätzlich um die Drehachse A drehbar ist, kann an einem dieser Bauteile, im dargestellten Falle am antriebsseitigen Hohlrad 80, in einem Bereich radial außerhalb der an diesen beiden Hohlrädern 80, 82 gebildeten Verzahnungen ein Dichtungselement 89 vorgesehen sein, um den die Planetenräder 74 aufnehmenden Volumenbereich nach radial außen hin im Wesentlichen fluiddicht zu kapseln. In seinem radial inneren Bereich ist dieser Volumenbereich durch die beiden Lager 86, 88, beispielsweise ausgebildet als Gleitlagerringe, und auch Durchgriffsöffnungen im Zentralscheibenelement 54 abschließende Verschlusskappen 90 fluiddicht abgeschlossen. Auch dieser Volumenbereich kann mit viskosem Medium gefüllt sein, so dass einerseits ein Schmiereffekt für die Planetenräder 74 erzielt werden kann, andererseits ein Fluiddämpfungsbeitrag bei Rotation der Planetenräder 74 um ihre zur Drehachse A parallelen Drehachse erreicht wird. Im Drehzustand wird fliehkraftbedingt das für die Erreichung des Schmiereffekts eingesetzte viskose Medium, also Öl oder Fett, sich nach radial außen verlagern, also in denjenigen Bereich, in welchem die Planetenräder 74 durch Kämmeingriff mit den beiden Hohlrädern 80, 82 einer vergleichsweise starken Verschleißbelastung unterliegen. Es reicht daher eine vergleichsweise geringe Menge viskosen Mediums, um diesen Effekt zu erreichen. Es ist nicht erforderlich, den gesamten gekapselten Volumenbereich zu füllen.

Man erkennt in der Fig. 4, dass der zweite Drehmomentübertragungsweg 22 im Wesentlichen steif, also zumindest in erster Näherung mit unendlich hoher Steifigkeit S₂ ausgeführt ist. Die in diesen zweiten Drehmomentübertragungsweg 22 eingeleiteten Schwingungsanteile des Drehmoments werden also im Wesentlichen ohne Phasenverschiebung bzw. Phasensprung und auch im Wesentlichen ohne Herbeiführung eines Dämpfungseffekts übertragen. Im ersten Drehmomentübertragungsweg 20 ist jedoch die erste Phasenschieberanordnung 26 mit ihrem ersten Schwingungssystem 32 vorgesehen, wobei der Aufbau des ersten Schwingungssystems 32 im Wesentlichen einem herkömmlichen Torsionsschwingungsdämpfer bzw. Zweimassenschwungrad gleicht. Durch Auswahl der Massenverhältnisse an der Primärseite 28 und an der Sekundärseite 30 einerseits und der Federkonstante der Federanordnung 52 andererseits wird es möglich, die Lage der Resonanzfrequenz bzw. die Resonanzstelle dieses ersten Schwingungssystems 32 so vorzugeben, dass sie beispielsweise unter der Leerlaufdrehzahl eines für ein Antriebssystem vorgesehenen Antriebsaggregats oder zumindest nahe dieser Leerlaufdrehzahl liegt. Dies bedeutet, dass im normalen Arbeitsbereich das erste Schwingungssystem überkritisch arbeiten wird, was bedeutet, dass die an der Sekundärseite 30 weitergeleiteten Schwingungsanteile des über den ersten Drehmomentübertragungsweg 20 übertragenen Drehmomentenanteils bezüglich der anregenden Schwingungsanteile bzw. auch der über den zweiten Drehmomentübertragungsweg 22 übertragenen Schwingungsanteile mit einer Phasenverschiebung von maximal 180° übertragen werden.

Es sei nun zunächst angenommen, dass keine Schwingungsanteile vorhanden sind, also ein konstantes Drehmoment am Eingangsbereich 16 eingeleitet und am Ausgangsbereich 18 abgegeben werden soll. Dies bedeutet, dass der Planetenradträger 68 und die Primärseite 28 sowie auch die Sekundärseite 30 und mithin das antriebsseitige Hohlrad 82 mit identischer Drehzahl um die Drehachse A rotieren. In Folge dessen werden die Planetenräder 24 sich nicht um ihre eigenen Drehachsen drehen. Dies wiederum bedingt, dass auch das abtriebsseitige Hohlrad 82 mit der gleichen Drehzahl wie der Planetenradträger 72 drehen wird.

Tritt nun ein spontaner Drehmomentenanstieg der Antriebswelle 44 im Sinne einer Schwingungsanregung auf, so hat dies eine entsprechende Drehbeschleunigung im zweiten Drehmomentübertragungsweg 22, insbesondere des Planetenradträgers 72 zur Folge. Dieser versucht, durch die Wechselwirkung der Planetenräder 74 mit dem abtriebsseitigen Hohlrad 82 der Planetengetriebeanordnung 66 ein entsprechend ansteigendes Drehmoment bzw. eine entsprechend ansteigende Drehzahl auf den Ausgangsbereich 18 zu übertragen.

Der spontane Anstieg des Drehmoments bzw. der Drehzahl führt jedoch im ersten Drehmomentübertragungsweg 20 dazu, dass unter Kompression der Federanordnung 52 eine Relativdrehung zwischen der Primärseite 28 und der Sekundärseite 30 auftritt. Diese Relativdrehung führt dazu, dass vorübergehend die Sekundärseite 30 mit etwas geringerer Drehzahl dreht, als die Primärseite 28 und somit auch mit geringerer Drehzahl als der Planetenradträger 72. Diese geringere Drehzahl führt dazu, dass die Planetenräder 74, nunmehr angetrieben durch eine Drehzahldifferenz zwischen der Sekundärseite 30 und dem Planetenradträger 72 um ihre eigenen Drehachsen drehen und dabei auch das abtriebsseitige Polrad 82 mitnehmen. Die Folge davon ist, dass das abtriebsseitige Hohlrad 82 der ansteigenden Drehzahl des Planetenradträgers 72 nicht folgen kann, da die durch die Sekundärseite 30 bewirkte Drehung der Planetenräder 74 eine gegenläufige Bewegung des abtriebsseitigen Hohlrads 82 auslöst.

In diesem Sinne werden dort, wo die beiden Drehmomentenanteile zusammengeführt werden, nämlich dort, wo die Planetenräder 74 mit den beiden Hohlrädern 80, 82 in Kämmeingriff stehen, Schwingungsanteile, welche über die beiden Drehmomentübertragungswege 20, 22 geführt werden, einander im Sinne einer destruktiven Interferenz überlagert. Im nur theoretisch erreichbaren Idealfalle kommt es zu einer vollständigen Auslöschung dieser sich überlagernden Schwingungsanteile. Da im praktischen Falle im Bereich des ersten Schwingungssystems 32 Reibeffekte nicht vollständig ausgeschlossen werden können bzw. vor allem auch zur Bedämpfung höherfrequenter Schwingungsanteile gewünscht sein können, wird der bei Übergang in den überkritischen Betriebszustand auftretende Phasensprung nicht exakt 180° betragen, sondern, je nach Größe der auftretenden Reibeffekte, etwas geringer sein.

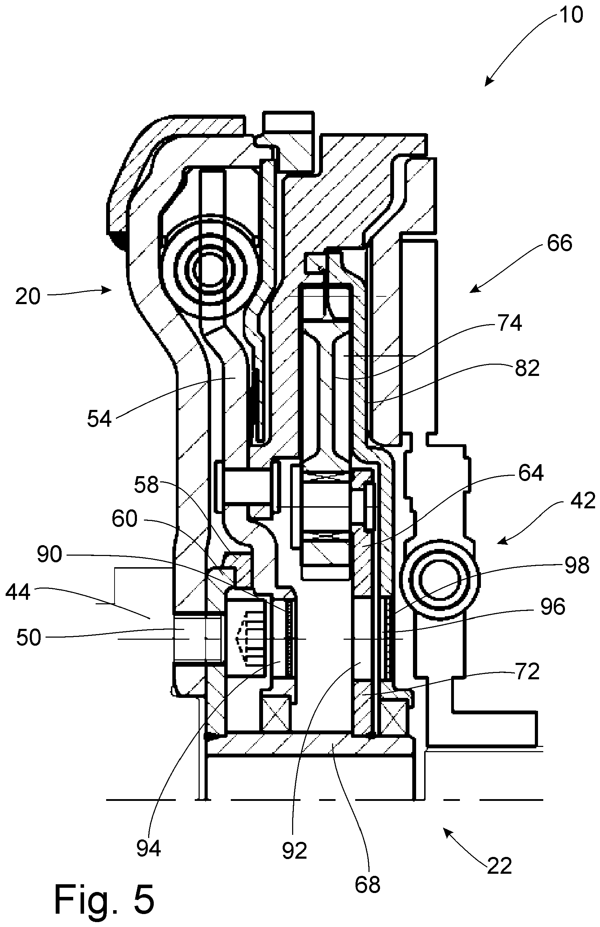

Eine abgewandelte Ausgestaltungsform einer Drehschwingungsdämpfungsanordnung 10 ist in Fig. 5 gezeigt. Im Folgenden wird dabei lediglich auf die zur Ausgestaltungsform der Fig. 4 bestehenden Änderungen eingegangen.

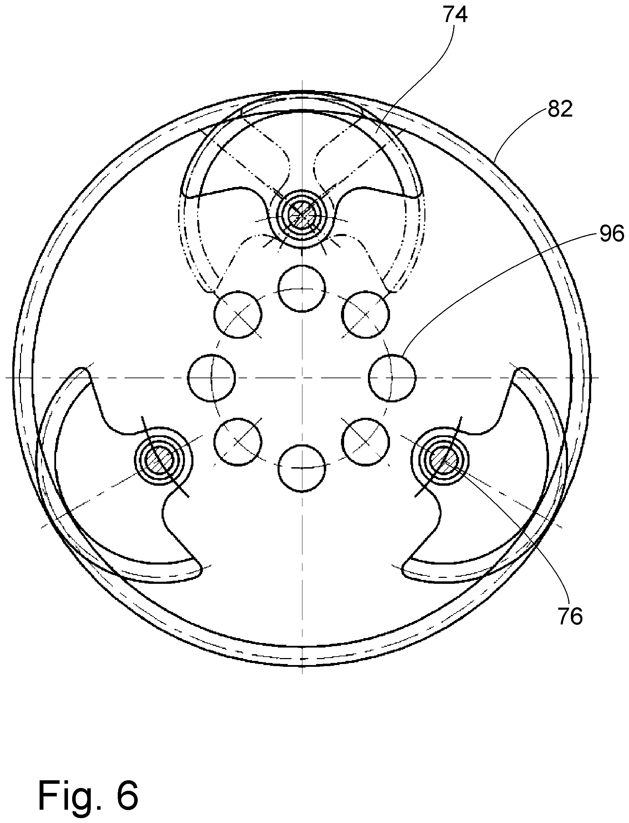

Bei der Drehschwingungsdämpfungsanordnung 10 der Fig. 5 sind die Planetenräder 74 der Planetengetriebeanordnung 66 nicht als voll umlaufende Zahnräder, sondern als Zahnradsegmente ausgebildet. Diese sind in der Fig. 6 in Kämmeingriff mit dem abtriebsseitigen Hohlrad 82 dargestellt. Da das antriebsseitige Hohlrad 80 und das abtriebsseitige Hohlrad 82 nur vergleichsweise geringe Relativdrehungen bezüglich des Planetenradträgers 72 ausführen werden und mithin auch die Planetenräder 74 nur in einem bestimmten Winkelbereich um ihre eigenen Drehachsen drehen werden, ist die segmentartige Ausgestaltung ausreichend und trägt zu einer Verringerung der Masse bzw. des Massenträgheitsmoments bei.

Man erkennt in Fig. 5 weiter, dass der Planetenradträger 64 mit seinem zylindrischen Abschnitt 68 und seinem nach radial außen sich erstreckenden und die Planetenräder 74 drehbar tragenden Planetenradträgerabschnitt 72 zweiteilig ausgebildet ist. Diese beiden Teile können durch Verschweißen miteinander verbunden sein. Die Anbindung des zylindrischen Abschnitts 68 an die Antriebswelle 44 erfolgt über das winkelartig ausgebildete Stützelement 60, welches in seinem radial äußeren Bereich die Anlaufscheibe 58 trägt und in seinem radial inneren Bereich mit dem zylindrischen Abschnitt 68 des Planetenradträgers 64 durch Verschweißung verbunden ist. Eine zusätzliche zentrale Verschraubung kann somit entfallen.

Weiter erkennt man, dass der Planetenradträger 64 in seinem Planetentradträgerabschnitt 72 Durchgriffsöffnungen 92 aufweist. Diese sind radial dort positioniert, wo die Schraubbolzen 50 zur Festlegung an der Antriebswelle 44 eingebracht werden müssen. Entsprechend weisen auch das Zentralscheibenelement 50 in seinem radial inneren Bereich und das abtriebsseitige Hohlrad 82 in seinem radial inneren Bereich Durchgriffsöffnungen 94, 96 auf. Die Durchgriffsöffnungen 94 sind durch die Abschlusskappen 90 abgeschlossen. Entsprechend sind die Durchgriffsöffnungen 96 durch Abschlusskappen 98 abgeschlossen, so dass der die Planetenträder 74 enthaltende Volumenbereich wieder im Wesentlichen fluiddicht gekapselt ist.

Auch bei dieser Ausgestaltungsform ist der zweite Drehmomentübertragungsweg 22 mit im Vergleich zum ersten Drehmomentübertragungsweg 20 sehr großer Steifigkeit, also im Wesentlichen ohne Elastizität ausgebildet, wobei selbstverständlich die verschiedenen der Drehmomentübertragung dienenden Bauteile, insbesondere der Planetenradträger 64, bei anliegendem Drehmoment eine unvermeidbare Verformung bzw. Tordierung erfahren und somit auch bei vergleichsweise steifer Ausgestaltung eine gewisse Elastizität aufweisen, die jedoch zu einer Eigenfrequenz deutlich über dem relevanten Frequenzbereich, also außerhalb des im normalen Fahrbetrieb auftretenden Drehzahlbereichs, führt.

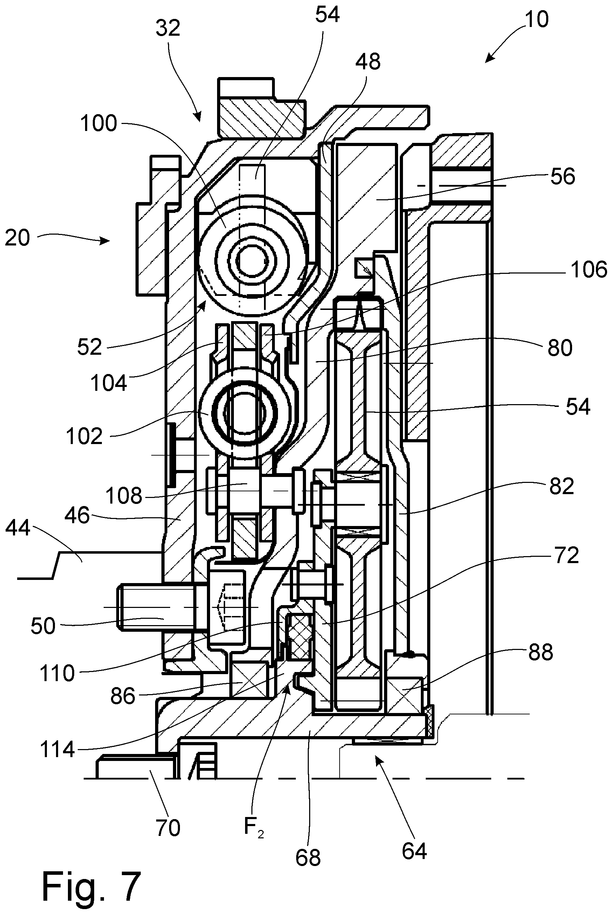

Eine weitere Abwandlung ist in Fig. 7 gezeigt. Bei dieser Drehschwingungsdämpfungsanordnung 10 ist das erste Schwingungssystem 32 im ersten Drehmomentübertragungsweg zweistufig ausgebildet. Die Federanordnung 52 umfasst hier zwei zueinander radial gestaffelt liegende Federsätze 100, 102. Der Federsatz 100 nimmt ein Antriebsdrehmoment von den beiden Deckscheibenelementen 46, 48 auf und gibt dieses an das Zentralscheibenelement 54 weiter. Das Zentralscheibenelement 54 bildet den Eingang der radial inneren, zweiten Dämpferstufe. Beidseits des radial inneren Bereichs des Zentralscheibenelements 54 liegen weitere Deckscheibenelemente 104, 106. Diese geben das in dem Federsatz 102 über das Zentralscheibenelement 54 aufgenommene Drehmoment weiter an das antriebsseitige Hohlrad 80, mit welchem sie durch Nietbolzen 108 fest verbunden sind.

Der Planetenradträger 64 ist mehrteilig aufgebaut, und der zylindrische Abschnitt 68 desselben ist durch den Schraubbolzen 70 zentral an die Antriebswelle 44 drehfest angebunden. Auf diesem zylindrischen Abschnitt 68 ist nunmehr der radial innere Bereich des Masseteils 56, welches auch als antriebsseitiges Hohlrad 80 wirksam ist, über das Lager 86 gelagert.

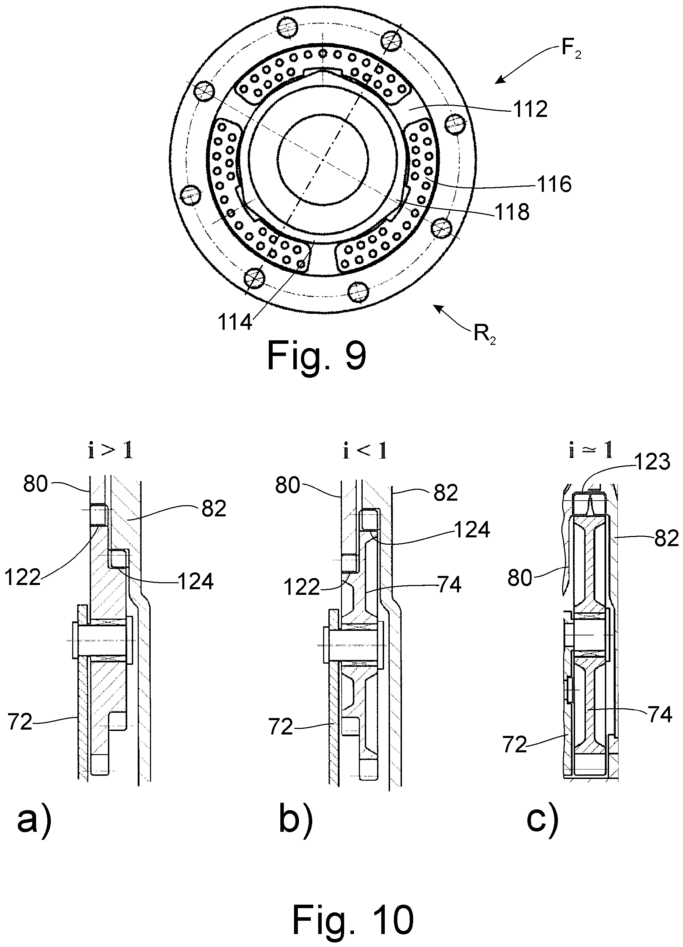

Der Planetenradträgerabschnitt 72 ist vom zylindrischen Abschnitt 68 getrennt ausgebildet und über eine nachfolgend mit Bezug auf die Fig. 9 erläuterte Fluiddämpfungsanordnung F₂ damit gekoppelt.

Man erkennt, dass der Planetenradträgerabschnitt 72 zusammen mit einem ringscheibenartigen Deckelement 110 eine Aufnahmekammer 112 für mehrere in Umfangsrichtung aufeinander folgende Verdrängungselemente bzw. Scherkeile bildet. Dieser Aufnahmeraum 112 ist nach radial innen durch einen ringartigen Ansatz 114 am zylindrischen Abschnitt 68 des Planetenradträgers 64 begrenzt. An diesem ringartigen Ansatz 114 sind in Zuordnung zu den Scherkeilen 116 nach radial außen vorspringende Mitnahmeabschnitte 118 ausgebildet, so dass bei Umfangsbewegung des zylindrischen Abschnitts 68 eine entsprechende Mitnahme der Scherkeile 116 erzwungen wird. Diese liegen, wie die Fig. 7 dies zeigt, mit ihren beiden axialen Stirnflächen an dem Planetenradträgerabschnitt 72 bzw. dem Deckelement 110 an und können zwischen diesen beiden Bauteilen beispielsweise unter Erzeugung eines Reibschlusses eingeklemmt sein. Der Raumbereich 112 ist weiterhin mit einem viskosen Medium, beispielsweise Öl oder Fett, gefüllt.

Bei Übertragung eines Drehmoments werden durch den zylindrischen Abschnitt 68 die Scherkeile 116 in Umfangsrichtung beaufschlagt. Durch ihre Wechselwirkung mit dem Planetenradträgerabschnitt 72 und dem Deckelement 110 erfahren sie dabei bei elastischer Ausgestaltung derselben eine Scherverformug oder/und sie bewegen sich bezüglich diesen beiden Bauteilen gleitreibend und erzeugen somit eine Reibkraft, so dass auch die Funktionalität der Reibungsdämpfungsanordnung R₂ erfüllt werden kann. Da diese Verformungsbewegung bzw. Umfangsbewegung unter Verdrängung des in dem Aufnahmeraum 112 enthaltenen viskosen Mediums erfolgt, ist zusätzlich auch für eine fluidische Dämpfungswirkung gesorgt.

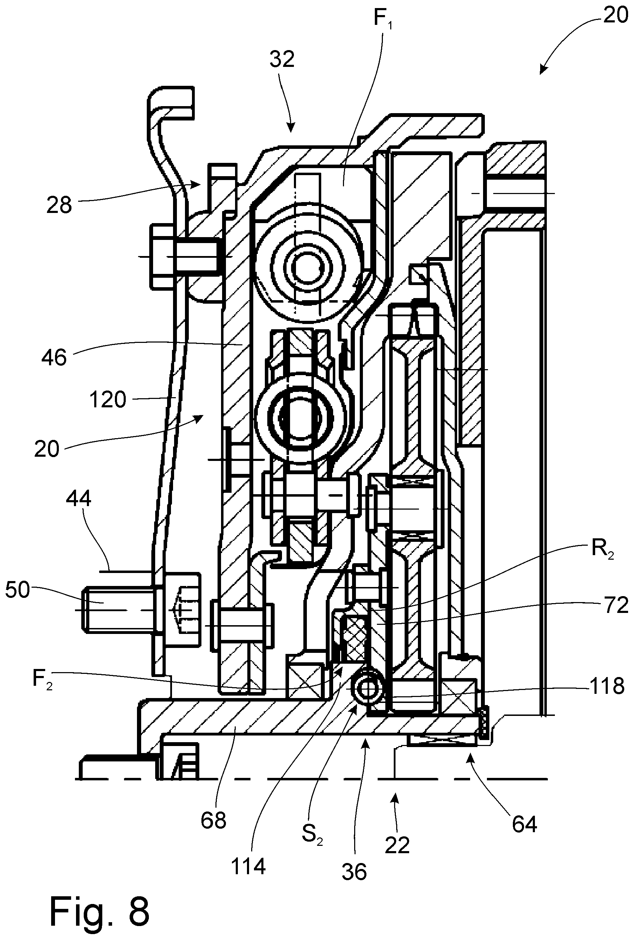

Bei der in Fig. 8 gezeigten Variante ist im zweiten Drehmomentübertragungsweg 22 zusätzlich eine Steifigkeit S₂ zum Aufbau eines zweiten Schwingungssystems 36 mit deutlich niedriger liegender Resonanzfrequenz vorgesehen. Hierzu ist eine Federanordnung 118 beispielsweise mit mehreren in Umfangsrichtung aufeinander folgenden Federn zwischen dem ringartigen Ansatz 114 des zylindrischen Abschnitts 68 und dem radial inneren Bereich des Planetenradträgerabschnitts 72 des Planetenradträgers 64 angeordnet. Parallel dazu wirken die vorangehend mit Bezug auf die Fig. 9 bereits beschriebenen, dämpfend wirksamen Anordnungen R₂ und F₂.

Die Resonanzfrequenz bzw. die Resonanzstelle dieses zweiten Schwingungssystems 36 im zweiten Drehmomentübertragungsweg ist auf die Resonanzfrequenz bzw. Resonanzstelle des ersten Schwingungssystems im ersten Drehmomentübertragungsweg 20 so abgestimmt, dass bei ansteigender Drehzahl und mithin auch ansteigender Regungsfrequenz bzw. ansteigender Frequenz der im Drehmoment enthaltenen Schwingungsanteile zunächst das Schwingungssystem 32 in seinen überkritischen Zustand übergeht, während das Schwingungssystem 36 noch im unterkritischen Zustand verbleibt. Der vorangehend erläuterte Phasensprung wird also zunächst nur im ersten Schwingungssystem 32 auftreten, beispielsweise bereits vor Erreichen der Leerlaufdrehzahl oder im Bereich der Leerlaufdrehzahl. Bei weiter ansteigender Drehzahl erfolgt dann die vorangehend erläuterte Überlagerung gegeneinander phasenverschobener Drehmomentenanteile, bis auch beispielsweise im Bereich der maximal erreichbaren Drehzahl des Antriebssystems das zweite Schwingungssystem 36 in seinen überkritischen Zustand übergeht und somit auch im zweiten Drehmomentübertragungsweg 22 der Phasensprung auftritt. Wie bereits erläutert, beträgt der Phasensprung maximal 180°. Seine tatsächliche Größe wird jedoch von den auftretenden Reibeffekten abhängen. Durch Einstellung der in den beiden Drehmomentübertragungswegen auftretenden reibend bzw. fluidisch dämpfend wirksamen Anordnungen kann somit die Größe des relativen Phasensprungs zwischen den beiden Drehmomentübertragungswegen 20, 22 eingestellt werden, so dass auch bei einem Zustand, in dem beide Drehmomentübertragungswege 20, 22 bzw. die darin angeordneten Schwingungssysteme 32, 36 überkritisch arbeiten, noch eine zu einer Schwingungsminderung beitragende Überlagerung erreichbar ist.

In Fig. 8 erkennt man weiterhin, dass im ersten Drehmomentübertragungsweg 20 eine so genannte Flexplatte, allgemein also eine axial elastische Platte 120, vorgesehen ist. Über diese axial elastische Platte 120 ist die Primärseite 28, also das Deckscheibenelement 46 derselben, an die Antriebswelle 44 vermittels der Schraubbolzen 50 angebunden. Dadurch wird eine axiale Schwingungsentkopplung des ersten Drehmomentübertragungswegs 20 von der Antriebswelle 44 erreicht. Um dies beispielsweise auch im zweiten Drehmomentübertragungsweg 22 zu erreichen, könnte der Planetenradträger 64, der ohnehin mehrteilig ausgebildet ist, beispielsweise im Bereich seines Planetenradträgerabschnitts 72 axial elastisch ausgeführt sein.

Die Fig. 10 zeigt in ihren Darstellungen a), b) und c) spezielle Ausgestaltungen der Planetenräder 74. Während bei den vorangehend beschriebenen Ausgestaltungsformen diese mit einem einzigen Verzahnungsbereich 123 ausgebildet sind (siehe auch Fig. 10c)), der auf dem gleichen radialen Niveau - bezüglich der Drehachsen der Planetenräder 74 - sowohl mit dem anstriebsseitigen Hohlrad 80, als auch dem abtriebsseitigen Hohlrad 82 zusammenwirkt, ist in Fig. 10a) ein gestuft ausgebildetes Planetenrad 74 erkennbar. Dieses weist einen ersten Verzahnungsbereich 122 zur Zusammenwirkung mit dem antriebsseitigen Hohlrad 80 und einen weiter radial innen liegenden zweiten Verzahnungsbereich 124 zur Zusammenwirkung mit dem abtriebsseitigen Hohlrad 82 auf. Hier ist für die beiden Verzahnungsabschnitte 122, 124 und somit auch die Wechselwirkung mit den beiden Hohlrädern 80, 82 ein Übersetzungsverhältnis von i > 1 vorgesehen. Auf diese Art und Weise wird es möglich, die über die beiden Drehmomentübertragungswege 20, 22 übertragenen Drehmomentenanteile des gesamt zu übertragenden Drehmoments einzustellen, wobei dem in Fig. 10a) gezeigten Ausgestaltungsbeispiel durch das Übersetzungsverhältnis von i > 1 erreicht wird, das über jeden der beiden Drehmomentübertragungswege 20, 22 ein Anteil des Drehmoments übertragen wird und diese beiden Anteile in der Koppelanordnung 24 wieder zusammengeführt werden. In dem in Fig. 10b) gezeigten Falle ist das Übersetzungsverhältnis i der Koppelanordnung 24 kleiner als 1. Dies führt dazu, dass im zweiten Drehmomentübertragungsweg 22 unter Verstärkung des auf den ersten Drehmomentübertragungsweg 20 geleiteten Drehmoments eine Drehmomentenabsenkung bzw. Umkehr des Drehmomentenflusses stattfindet. Der in diesem Falle über den ersten Drehmomentübertragungsweg geleitete Drehmomentenanteil ist mithin gegenüber dem eingeleiteten Drehmoment verstärkt und überlagert sich mit dem im zweiten Drehmomentübertragungsweg in umgekehrter Richtung geleiteten Drehmoment in der Kopplungsanordnung 24. Auch auf diese Weise wird eine destruktive Überlagerung von in den beiden Drehmomentübertragungswegen 20, 22 vorhandenen Schwingungsanteilen erreicht.

In dem Fall, in welchem gilt: i = 1, würde eine Aufteilung des zu übertragenden Drehmomentes über die beiden Drehmomentübertragungswege tatsächlich nicht stattfinden und insofern auch keine durch Überlagerung phasenverschobener Schwingungsanteile eingeführte Dämpfungsfunktionalität erzielt werden können. Vielmehr wäre bei derartiger Ausgestaltung das über den zweiten Drehmomentübertragungsweg übertragene Drehmoment gleich Null. Um gleichwohl bei der in Fig. 10c) gezeigten ausgestatlung der Planetenräder 74 als normale Stirnräder, also mit einer für die beiden Hohlräder 80, 82 auf gleichem radialen Niveau liegenden Außenumfangsverzahnung 123, ein von 1 verschiedenes, gleichwohl jedoch nahe bei 1 liegendes Übersetzungsverhältnis erlangen zu können, können die beiden Hohlräder 80, 82 mit zueinander unterschiedlicher Profilverschiebung ausgebildet sein. Dies vereinfacht grundsätzlich den Aufbau, insbesondere im Bereich der Planetenräder 74, gestattet jedoch das Vorsehen eines von 1 verschiedenen Übersetzungsverhältnisses und somit das Übertragen eines Teils des Drehmomentes über den zweiten Drehmomentübertragungsweg.

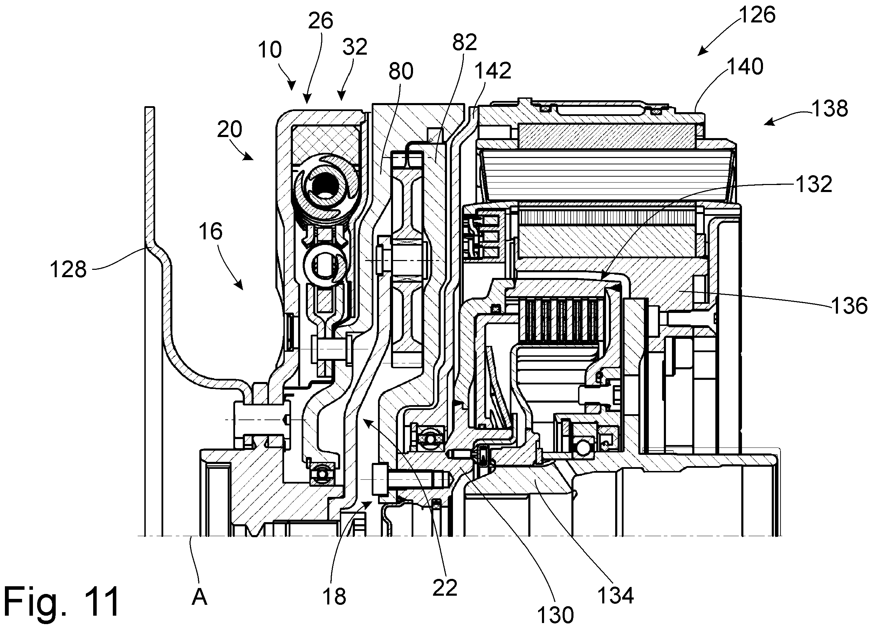

Die Fig. 11 zeigt den Einsatz einer erfindungsgemäß aufgebauten Drehschwingungsdämpfungsanordnung 10 bei einem Hybridantriebsmodul 126. Der Eingangsbereich 16 der Drehschwingungsdämpfungsanordnung 10 ist über eine Koppelplatte 128 und eine damit zu verbindende, in der Fig. 11 nicht dargestellte Flexplatte oder dergleichen an eine Antriebswelle, also beispielsweise die Kurbelwelle einer Brennkraftmaschine, anzubinden. Der Ausgangsbereich 18, hier im Wesentlichen bereitgestellt durch das abtriebsseitige Hohlrad 82, ist mit dem Gehäuse 130 einer nasslaufenden Lamellenkupplung 132 durch Verschraubung fest verbunden. Ein Abtriebselement 134 der nasslaufenden Lamellenkupplung ist mit einer nicht dargestellten Abtriebswelle, also beispielsweise einer Getriebeeingangswelle, drehfest zu koppeln. Mit dem Abtriebselement 134 ist weiterhin der Rotor 136 einer Elektromaschine 138 zur gemeinsamen Drehung gekoppelt. Eine Statoranordnung 140 der Elektromaschine 138 ist beispielsweise über ein das Gehäuse 130 der nasslaufenden Lamellenkupplung 132 lagerndes Trägerelement 142 getragen.

Es sei in diesem Zusammenhang darauf hingewiesen, dass die Drehschwingungsdämpfungsanordnung 10, wie sie in Fig. 11 gezeigt ist, in ihrem grundsätzlichen Aufbau der in Fig. 4 gezeigten Ausgestaltungsvariante entspricht. Selbstverständlich könnten auch die anderen vorangehend erläuterten und in verschiedenen Bereichen auch modifizierten Drehschwingungsdämpfungsanordnungen hier zum Einsatz gelangen. Auch sei weiter darauf hingewiesen, dass das Hybridantriebsmodul 126 insofern, als der Aufbau der nasslaufenden Lamellenkupplung 132 bzw. auch der Elektromaschine 138 betroffen ist, anders ausgeführt sein könnte, als in Fig. 11 dargestellt.

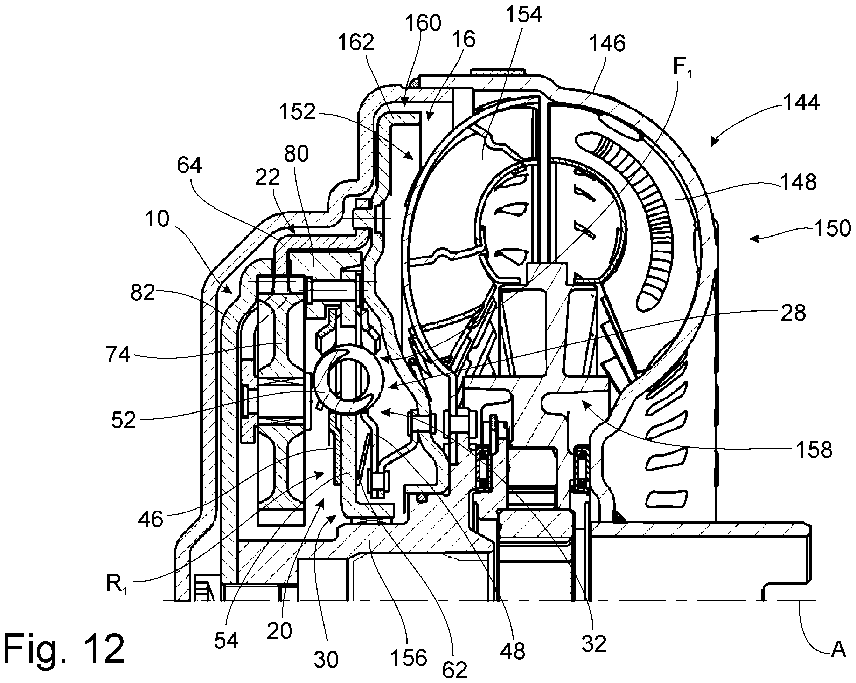

Die Fig. 12 zeigt die Integration einer erfindungsgemäßen Drehschwingungsdämpfungsanordnung 10 in einen hydrodynamischen Drehmomentwandler 144. Dieser weist ein mit Fluid gefülltes oder füllbares Wandlergehäuse 146 und an einer Innenseite desselben getragen eine Mehrzahl von Pumpenradschaufeln 148 zum Bereitstellen eines Pumpenrads 150 auf. Im Wandlergehäuse 146 ist ein Turbinenrad 152 mit den Pumpenradschaufeln 148 axial gegenüber liegenden Turbinenradschaufeln 154 angeordnet. Das Turbinenrad 152 ist über eine Turbinenradnabe 156 mit einer nicht dargestellten Abtriebswelle, beispielsweise Getriebeeingangswelle, zu koppeln. Zwischen dem Turbinenrad 152 und dem Pumpenrad 150 ist ein allgemein mit 158 bezeichnetes Leitrad angeordnet, das über eine Freilaufanordnung auf einer nicht dargestellten Stützhohlwelle um die Drehachse A in einer Richtung drehbar getragen ist.

Eine Überbrückungskupplung 160 umfasst einen Kupplungskolben 162, der bedingt durch die Druckverhältnisse im Inneren des Wandlergehäuses in und außer Reibeingriff mit diesem gebracht werden kann. Der Kupplungskolben 162 bildet dabei im Wesentlichen auch den Eingangsbereich 16 der Drehschwingungsdämpfungsanordnung 10. Der Planetenradträger 64 ist in seinem radial äußeren Bereich mit dem Kupplungskolben 162 zur gemeinsamen Drehung um die Drehachse A gekoppelt, wobei jedoch zum Ermöglichen des Ein- und Ausrückens der Kupplungskolben 162 axial bezüglich des Planetenradträgers 64 beweglich ist. In seinem radial inneren Bereich trägt der Planetenradträger 64 die Planetenräder 74. Diese stehen in ihrem radial äußeren Bereich in Kämmeingriff mit dem antriebsseitigen Hohlrad 80 und im abtriebsseitigen Hohlrad 82, das wiederum in seinem radial inneren Bereich mit der Turbinenradnabe 156 beispielsweise durch Verschraubung drehfest verbunden ist.

Der erste Drehmomentübertragungsweg 20 umfasst auch bei dieser Ausgestaltungsvariante wieder das erste Schwingungssystem 32 mit der Federanordnung 52 und einer die beiden Deckscheiben 46, 48 umfassenden Primärseite 28 und einer das Zentralscheibenelement 54 umfassenden Sekundärseite 30. Das Zentralscheibenelement 54 ist in seinem radial inneren Bereich auf der Turbinenradnabe 156 drehbar gelagert und ist in seinem radial äußeren Bereich mit dem antriebsseitigen Hohlrad 80 beispielsweise durch Vernietung fest verbunden. Ein zwischen dem Deckscheibenelement 48 und dem Zentralscheibenelement 54 wirksames Vorspannfederelement 62 presst das Zentralscheibenelement 54 axial gegen den radial inneren Bereich des Deckscheibenelements 46, so dass hier eine Reibungsdämpfungsanordnung R₁ bereitgestellt ist.

Auf Grund der Tatsache, dass das Wandlergehäuse 146 im Allgemeinen vollständig mit Öl gefüllt sein wird, bewegen sich die Primärseite 28 und die Sekundärseite 30 des Schwingungssystems 32 bei auftretenden Drehungleichförmigkeiten bezüglich einander in einem viskosen Medium, nämlich dem Öl, so dass auf diese Art und Weise auch die Fluiddämpfungsanordnung F₁ realisiert ist.

Durch die Aufzweigung in den ersten Drehmomentübertragungsweg 20 und den zweiten Drehmomentübertragungsweg 22 wird im Einrückzustand der Überbrückungskupplung 160 erreicht, dass insbesondere von einer Brennkraftmaschine generierte Drehungleichförmigkeiten nicht über den hydrodynamischen Drehmomentwandler 144 hinweg übertragen und somit in den weiteren Antriebsstrang weitergeleitet werden bzw. nur in gedämpfter Weise weitergeleitet werden.

Im Folgenden werden mit Bezug auf verschiedene prinzipartige Darstellungen Variationsmöglichkeiten einer erfindungsgemäß aufgebauten Drehschwingungsdämpfungsanordnung erläutert.

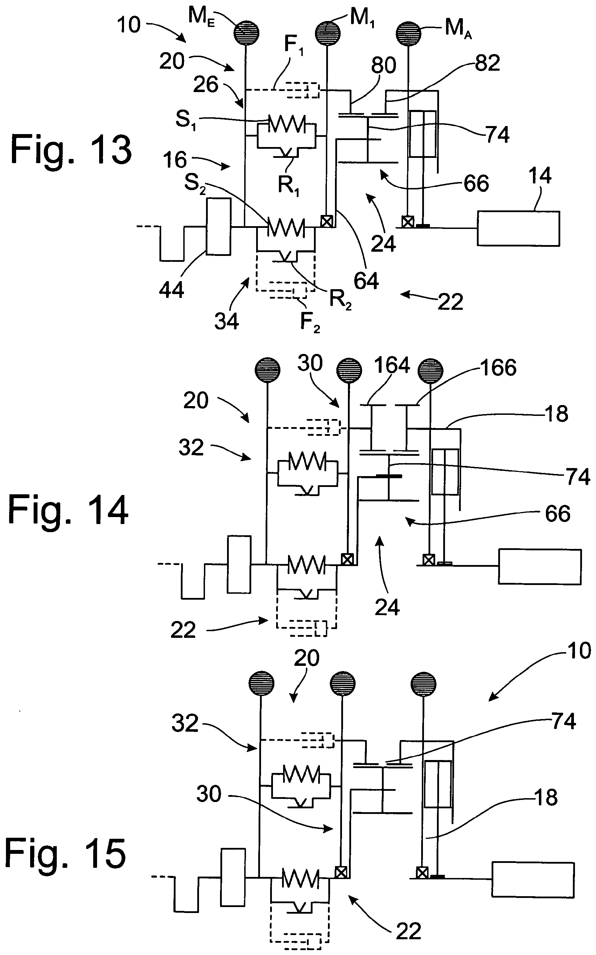

Die Fig. 13 zeigt dabei grundsätzlich einen Aufbau, wie er vorangehend mit Bezug auf die Fig. 1 bereits erläutert wurde. In jedem der Drehmomentübertragungswege 20, 22 ist eine Steifigkeit S₁ bzw. S₂ und parallel dazu geschaltet jeweils eine Reibungsdämpfungsanordnung R₁, R₂ bzw. eine Fluiddämpfungsanordnung F₁, F₂ vorgesehen. Zum Bereitstellen der Phasenverschiebung weisen die beiden Steifigkeiten S₁ bzw. S₂ und die damit aufgebauten Schwingungssysteme zueinander unterschiedliche Eigenfrequenzen auf.

Die Fig. 14 zeigt eine Variante, bei welcher die Planetenräder 74 der als Koppelanordnung 24 wirksamen Planetengetriebeanordnung 64 radial außen nicht mit Hohlrädern 80, 82, sondern mit über den Umfang verteilt angeordneten antriebsseitigen Stirnrädern 164 und abtriebsseitigen Stirnrädern 166 zusammenwirken. Diese sind an der Sekundärseite 30 des ersten Schwingungssystems 32 einerseits bzw. am Ausgangsbereich 18 jeweils drehfest gehalten und wirken somit zur Drehmomentenübertragung bzw. Abstützung mit den beiden Planetenrädern 74 zusammen.

Bei der in Fig. 15 dargestellten Variante sind die an der Sekundärseite 30 des ersten Schwingungssystems 32 bzw. auch am Ausgangsbereich 18 der Drehschwingungsdämpfungsanordnung 10 vorgesehenen Stirnräder an der radialen Innenseite der Planetenräder 74 angeordnet.

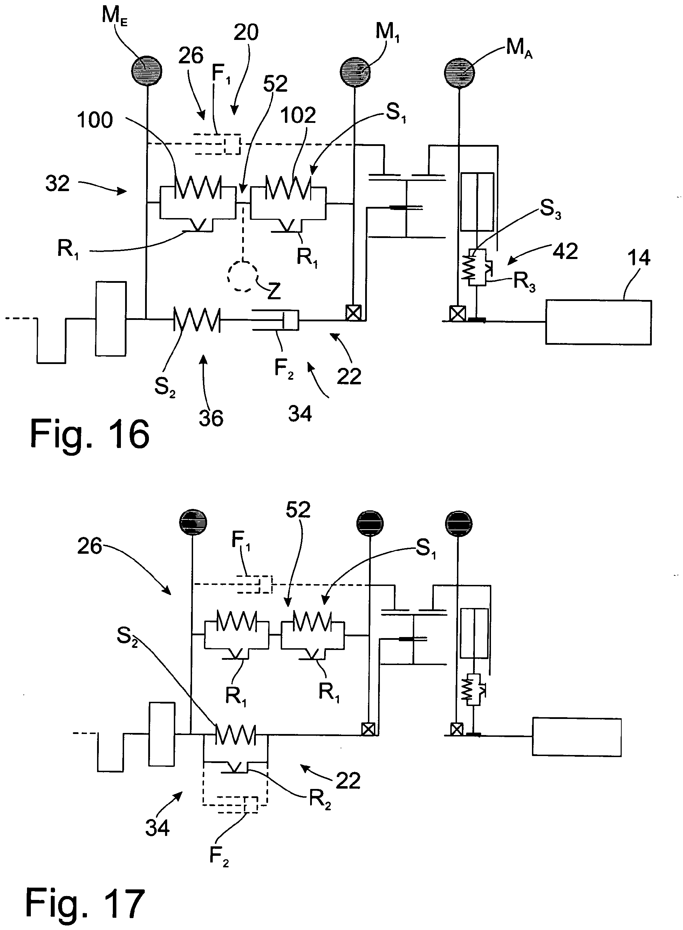

Die Fig. 16 veranschaulicht einen Aufbau, der demjenigen der Fig. 7 ähnlich ist. Die Federanordnung 52 der Steifigkeit S₁ der Phasenschieberanordnung 26 umfasst hier zwei seriell wirksame Federsätze 102 und parallel dazu jeweils eine Reibungsdämpfungsanordnung R₁. Parallel zur gesamten Federanordnung 52 bzw. zur Steifigkeit S₁ wirkt eine Fluiddämpfungsanordnung F₂. Zwischen den beiden Federsätzen 100, 102 ist insbesondere durch die diese zur Drehmomentübertragung koppelnden Bauteile eine Zwischenmasse Z gebildet. Der zweite Drehmomentübertragungsweg 22 umfasst seriell zur Steifigkeit S₂ eine Fluiddämpfungsanordnung F₁. Weiterhin ist die beispielsweise im Bereich einer Kupplungsscheibe angeordnete dritte Steifigkeit S₃ mit einer dazu parallel liegenden Reibungsdämpfungsanordnung R₃ zu erkennen.

Bei der in Fig. 17 gezeigten Abwandlung, welche grundsätzlich auf dem in Fig. 16 gezeigten Aufbau basiert, ist im zweiten Drehmomentübertragungsweg 22 parallel zur Steifigkeit S₂ sowohl eine Reibungsdämpfungsanordnung R₂ als auch eine Fluiddämpfungsanordnung F₂ vorgesehen.

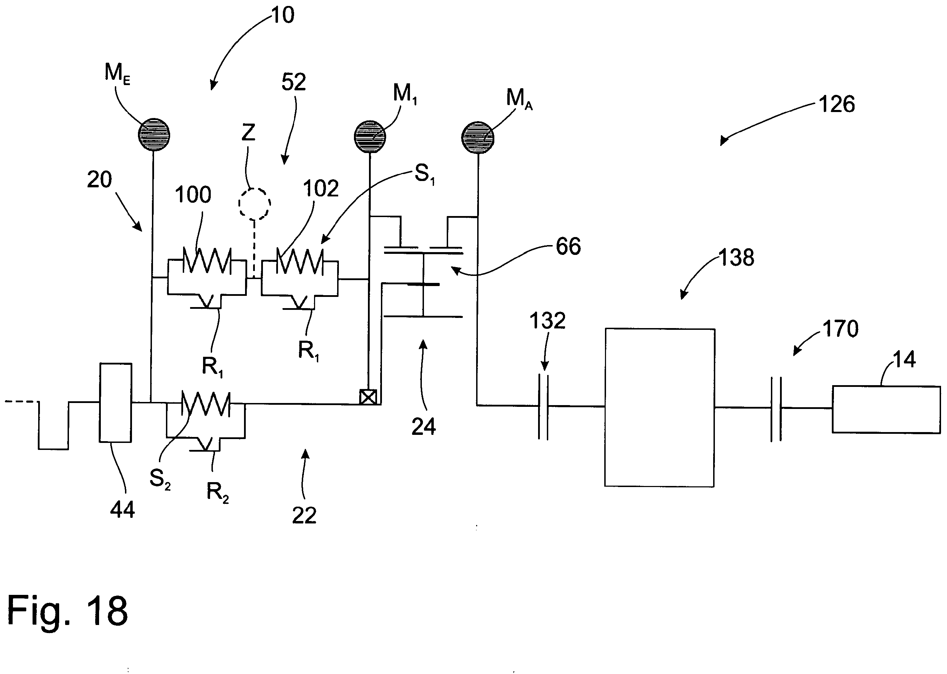

Die Fig. 18 veranschaulicht die Integration einer Drehschwingungsdämpfungsanordnung 10 mit den beiden Drehmomentübertragungswegen 20, 22 in ein Hybridantriebsmodul 126. Im ersten Drehmomentübertragungsweg 20 umfasst die erste Steifigkeit S₁ wieder die beiden seriell wirksamen Federsätze 100, 102 der Federanordnung 52 und dazu jeweils parallel eine Reibungsdämpfungsanordnung R₁. Im zweiten Drehmomentübertragungsweg ist parallel zur Steifigkeit S₂ eine Reibungsdämpfungsanordnung R₂ wirksam. Schematisch dargestellt ist eine beispielsweise in Form der nasslaufenden Lamellenkupplung 132 ausgebildete Kupplung, welche eine Abkopplung/Ankopplung eines Antriebsaggregats, also beispielsweise einer Brennkraftmaschine, und damit auch der Drehschwingungsdämpfungsanordnung 10 vom/an den folgenden Teil des Antriebsstrangs und somit insbesondere auch der Elektromaschine 138 realisiert. Folgend auf die Elektromaschine 138 kann mit einer weiteren als Anfahrelement wirksamen Kupplung 170 der Drehmomentenfluss beispielsweise zur Durchführung von Schaltvorgängen im Getriebe 14 unterbrochen werden.

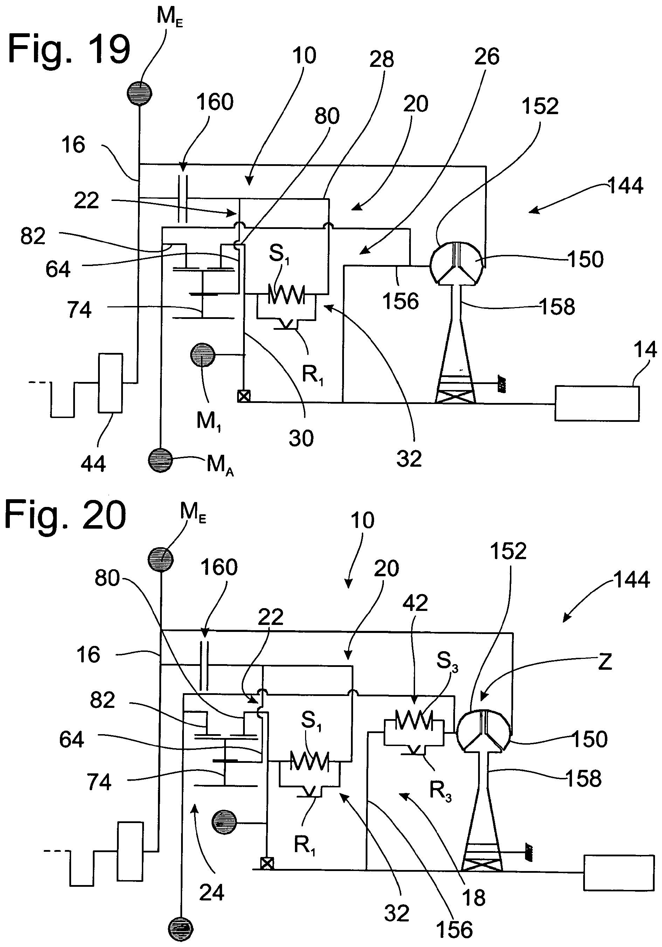

Die Fig. 19 veranschaulicht in prinzipieller Weise die Integration der Drehschwingungsdämpfungsanordnung 10 in einen hydrodynamischen Drehmomentwandler 144. Deutlich erkennbar ist die Aufgliederung der Drehmomentübertragung folgend auf die Überbrückungskupplung 160 in die beiden Drehmomentübertragungswege 20 und 22. Im Drehmomentübertragungsweg 20 ist der erste Phasenschieber 26 mit seiner ersten Steifigkeit S₁ bzw. dem Schwingungsystem 32 angeordnet. Im zweiten Drehmomentübertragungsweg 20 liegt der Planetenradträger 64 mit seinen daran drehbar getragenen Planetenräder 74. Diese stehen in Kämmeingriff mit dem antriebsseitigen und an die Sekundärseite 30 des Schwingungssystems 32 angebundenen antriebsseitigen Hohlrad 80 und dem an die Turbinenradnabe 156 angebundenen abtriebsseitigen Hohlrad 82. So wie bei dem in Fig. 12 gezeigten Aufbau ist auch hier die Torsionsschwingungsdämpferanordnung 10 grundsätzlich nur dann wirksam, wenn die Überbrückungskupplung 160 in einem Einrückzustand ist.

Bei dem in Fig. 20 gezeigten Aufbau ist neben dem Schwingungssystem 32 im ersten Drehmomentübertragungsweg 20 und im Drehmomentenfluss nach der Koppelanordnung 24 ein drittes Schwingungssystem 42 im Ausgangsbereich 18 mit einer dritten Steifigkeit S₃ und parallel dazu einer Reibungsdämpfungsanordnung R₃ wirksam. Zwischen den beiden Schwingungssystemen 32, 42 bildet das Turbinenrad 152 eine Zwischenmasse Z, was sich im Einrückzustand der Überbrückungskupplung 160 zur Schwingungsdämpfung vorteilhaft auswirkt. Weiterhin ist das dritte Schwingungssystem 42 auch bei ausgerückter Überbrückungskupplung 160, also bei einer Drehmomentübertragung vom Pumpenrad 150 über das Turbinenrad 152 zur Turbinenradnabe 156 wirksam.

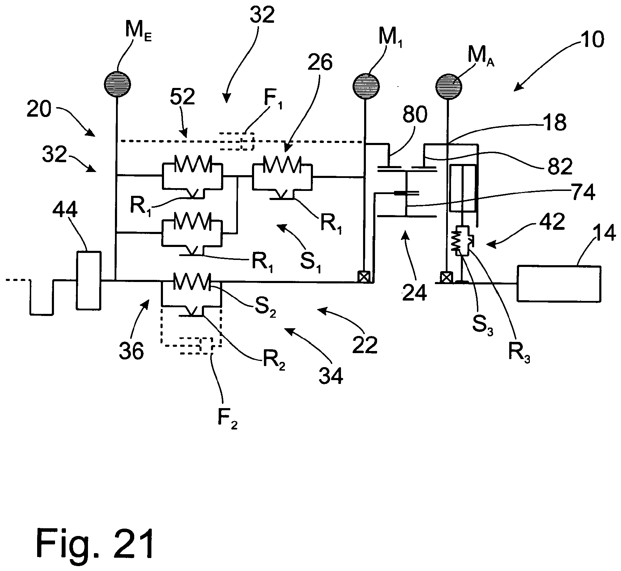

Die Fig. 21 zeigt eine Drehschwingungsdämpfungsanordnung 10, bei welcher das im ersten Drehmomentübertragungsweg 20 vorgesehene Schwingungssystem 32 insgesamt drei Steifigkeiten S₁ umfasst. Zwei davon sind zueinander seriell geschaltet. Eine dritte der Steifigkeiten S₁ ist zur ersten der beiden seriell geschalteten Steifigkeiten S₁ parallel geschaltet. Zu jeder der drei Steifigkeiten S₁ ist parallel eine Reibungsdämpfungsanordnung R₁ geschaltet. Weiterhin wirkt im Schwingungssystem 32 parallel zu den Steifigkeiten S₁ eine Fluiddämpfungsanordnung F₁. Im zweiten Drehmomentübertragungsweg 22 ist ein Schwingungssystem 36 mit einer Steifigkeit S₂ und parallel dazu einer Reibungsdämpfungsanordnung R₂ und einer Fluiddämpfungsanordnung F₂ vorgesehen.

Es sei mit Bezug auf die Fig. 21 noch einmal betont, dass jede der Steifigkeiten S₁ bzw. S₂ sowie auch die in eine Kupplungsscheibe einer Reibungskupplung integrierte Steifigkeit S₃ jeweils Federanordnungen mit mehreren seriell oder/und ineinander geschachtelten Federn, insbesondere Schraubendruckfedern, umfassen kann.

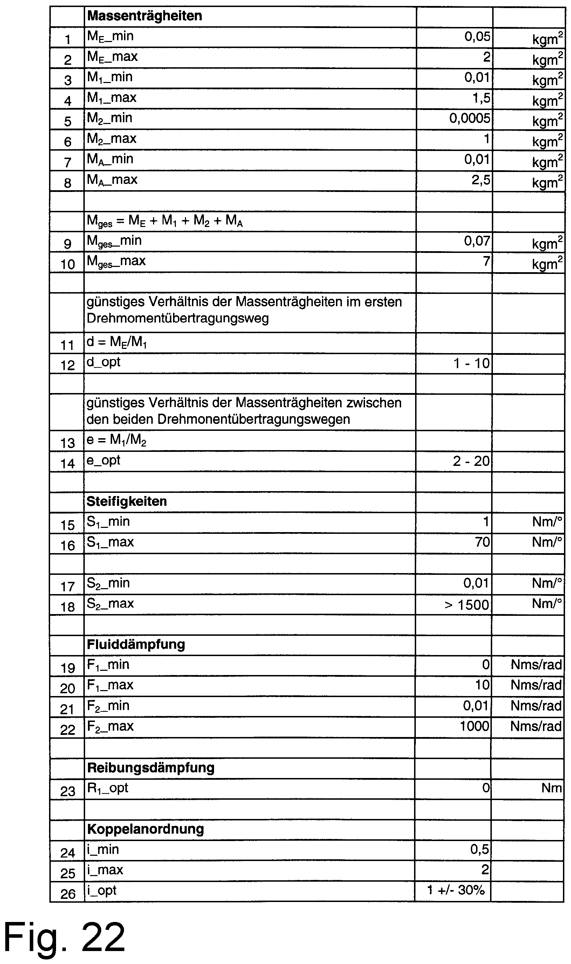

Die Fig. 22 zeigt eine tabellarische Auflistung verschiedener Größen bzw. Verhältnissen davon, wie sie bei einer erfindungsgemäßen Drehschwingungsdämpfungsanordnung vorgesehen sein können. Es sei darauf hingewiesen, dass jede der in der Tabelle 1 angegebenen Größen bzw. jedes Verhältnis mit dem jeweils zugeordneten Zahlenwert bzw. Zahlenbereich einzeln oder in Kombination mit einer oder beliebigen weiteren dieser Größe bei jeder der vorangehend beschriebenen Drehschwingungsdämpfungsanordnungen realisiert sein kann.

Zur Erläuterung der Tabelle 1 sei ausgeführt, dass mit den Anhängen "min" bzw. "max" jeweils ein minimaler Wert bzw. ein maximaler Wert für eine bestimmte Größe, beispielsweise das dem Eingangsbereich zugeordnete Massenträgheitsmoment M_{E} angeben. Der optimale Wert für dieses Massenträgheitsmoment M_{E} des Eingangsbereichs liegt also beispielsweise zwischen 0,05 kgm² und 2 kgm², wie den Zeilen 1 und 2 der Tabelle 1 zu entnehmen ist.

Weiter hat sich gezeigt, dass das Verhältnis d des Massenträgheitsmomentse M_{E} des Eingangsbereichs 16 bzw. auch der Primärseite 28 zu dem Massenträgheitsmoment M₁, also dem sekundärseitigen Massenträgheitsmoment im ersten Drehmomentübertragungsweg 20, vorteilhafterweise in einem Bereich von 1 bis 10 liegen sollte. Ein Verhältnis e des sekundärseitigen Massenträgheitsmoments M₁ des ersten Drehmomentübertragungsweg zu einem Massenträgheitsmoment M₂ im zweiten Drehmomentübertragungsweg, ggf. auch hier also dem sekundärseitigen Massenträgheitsmoment bzw. dem Gesamtmassenträgheitsmoment, wenn keine Elastizität vorhanden ist, sollte vorteilhafterweise im Bereich von 2 bis 20 liegen.

Weiter hat sich gezeigt, dass die Steifigkeit S₂ im zweiten Drehmomentübertragungsweg 22 vorteilhafterweise über 800 Nm/°, am meisten bevorzugt über 1500 Nm/° liegen sollte. Dies führt zu einem sehr steifen, Drehschwingungen im Wesentlichen nicht zulassenden zweiten Drehmomentübertragungsweg 22, so dass im auftretenden Frequenz- bzw. Anregungsbereich Eigenschwingungen dieses Drehmomentübertragungswegs im Wesentlichen verhindert werden. Eine durch Schwingungsanregung induzierte Phasenverschiebung tritt dann im Wesentlichen nur im ersten Drehmomentübertragungsweg auf. Es sei hier noch einmal betont, dass selbstverständlich das Schwingungsverhalten auch des zweiten Drehmomentübertragungswegs 22 durch das Vorsehen einer Reibungsdämpfungsanordnung oder einer Fluiddämpfungsanordnung beeinflusst werden kann und somit in Abstimmung auf das Schwingungsverhalten des ersten Drehmomentübertragungswegs in einem optimalen Bereich gehalten werden kann.

Mit Hinblick auf die verschiedenen Steifigkeiten bzw. Federsteifigkeiten in den beiden Drehmomentübertragungswegen ist auszuführen, dass die Steifigkeit bzw. die Gesamtsteifigkeit im ersten Drehmomentübertragungsweg, welcher als Hauptzweig der Drehmomentübertragung betrachtet werden kann, vorzugsweise so gewählt wird, dass eine tiefe Abstimmung erreicht wird. Dies bedeutet, dass die Eigenfrequenz des im ersten Drehmomentübertragungsweg vorhandenen Schwingungssystems in einem Drehzahlbereich unter dem im normalen Betrieb auftretenden Betriebsdrehzahlbereich liegt, der im Allgemeinen zwischen einer Leerlaufdrehzahl und einer maximalen Drehzahl, welche durch ein Antriebsaggregat bereitgestellt werden kann, liegt. Die Steifigkeiten können ein- oder mehrstufig ausgebildet sein und beispielsweise einen maximalen Verdrehwinkel zwischen der Primärseite und der Sekundärseite von etwa 80°zulassen.

Die Steifigkeit im zweiten Drehmomentübertragungsweg, welcher als Überlagerungszweig betrachtet werden kann, ist vorzugsweise so gewählt, dass eine hohe Abstimmung erreicht wird. Dies bedeutet, dass die Eigenfrequenz des im zweiten Drehmomentübertragungsweg vorhandenen Schwingungssystems über dem Betriebsdrehzahlbereich liegen sollte. Dies bedeutet, dass im normalen Betrieb ein Übergang des Schwingungssystems im zweiten Drehmomentübertragungsweg in einen überkritischen Zustand nicht auftreten wird.

Die Fluiddämpfung bzw. viskose Dämpfung im ersten Drehmomentübertragungsweg, also dem Hauptzweig der Drehmomentübertragung, wird vorzugsweise in Abhängigkeit von verschiedenen weiteren Betriebsgrößen bzw. Parametern ausgewählt, wobei vorgesehen sein kann, dass die im ersten Drehmomentübertragungsweg erreichbare Eigenfrequenz bzw. Resonanzfrequenz unter der Leerlaufdrehzahl liegt und somit die Reduzierung der Drehungleichförmigkeiten günstig beeinflusst wird.

Im zweiten Drehmomentübertragungsweg, also dem Überlagerungszweig, kann die Fluiddämpfung gleichermaßen abhängig von weiteren Betriebsgrößen bzw. Parametern eingestellt werden, vorzugsweise so, dass hier die Eigenfrequenz über der maximal erreichbaren Drehzahl, also außerhalb des Betriebsdrehzahlbereichs liegt und somit ebenfalls die Reduzierung von Drehungleichförmigkeiten vorteilhaft beeinflusst werden kann.

Bei der Reibungsdämpfung kann beispielsweise durch verschiedene konstruktive Maßnahmen der im ersten Drehmomentübertragungsweg, also im Hauptzweig vorhandene Reibwert so gewählt werden, dass er möglichst nahe beim Optimalwert von 0 Nm liegt. Hierzu können besonders reibungsarme Anbindungen bzw. Kopplungen der verschiedenen in Wechselwirkung tretenden Elemente gewählt werden. Insbesondere ist es möglich, durch die Auswahl sehr reibungsarmer bzw. reibungsmindernder Materialien die systembedingt nie völlig auszuschließende Reibung so weit als möglich zu reduzieren. Je geringer die Reibung im ersten Drehmomentübertragungsweg, desto näher bewegt sich der beim Übergang in den überkritischen Zustand erreichbare Phasensprung an den Maximalwert von 180° heran.

Bei der Koppelanordnung, welche, wie vorangehend dargestellt, mit zwei Hohlrädern, nämlich einem ersten Hohlrad im ersten Drehmomentübertragungsweg und einem zweiten Hohlrad am Abtrieb, sowie Planetenrädern im zweiten Drehmomentübertragungsweg aufgebaut sein kann, wird durch Einstellung des Übersetzungsverhältnisses beispielsweise in einem Bereich zwischen 0,5 und 2 die Aufteilung bzw. die Größe des über den ersten Drehmomentübertragungsweg zu leitenden Drehmoments beeinflusst. Hier hat sich gezeigt, dass ein optimaler Wert des Übersetzungs- bzw. Aufteilungsverhältnisses zwischen 0,7 und 1,3 liegen kann.

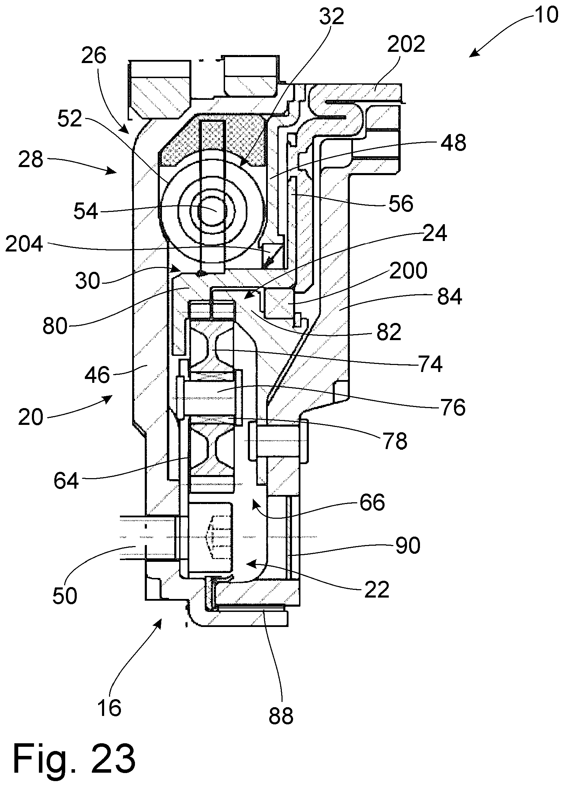

Die Fig. 23 zeigt eine weitere alternative Ausgestaltungsart einer Drehschwingungsdämpfungsanordnung 10, welche in ihrem prinzipiellen Aufbau derjenigen der Fig. 4 entspricht. Während jedoch bei der in Fig. 4 gezeigten Ausgestaltungsform die im ersten Drehmomentübertragungsweg 20 vorgesehene Phasenschieberanordnung 26 und die die Planetengetriebeanordnung 66 umfassende Kopplungsanordnung 24 axial aufeinander folgend, also nebeneinander liegend angeordnet sind und sich die Planetenräder 74 nach radial außen bis in den Bereich der Dämpferfedern 52 erstrecken, liegt bei der in Fig. 23 dargestellten Ausgestaltungsform die Kopplungsanordnung 24, also im Wesentlichen die Planetenradanordnung 66 mit ihren Planetenrädern 74 und auch den beiden Hohlrädern 80, 82, radial innerhalb der Phasenschieberanordnung 26 und mit dieser sich im Wesentlichen vollständig axial überlappend. Hier wird also eine axial sehr kurzbauende Ausgestaltung mit effizienter Ausnutzung des radial inneren Bauraums erreicht.

Man erkennt in Fig. 23, dass der scheibenartig ausgebildete Planetenradträger 64 zusammen mit dem Deckscheibenelement 46 des ersten Drehmomentübertragungswegs 20 durch die Schraubbolzen 50 an einer Antriebswelle oder dergleichen festgelegt wird. Um Zugriff zu diesen Schraubbolzen zu erhalten, ist in dem auch als Schwungmasse wirksamen ringartigen Reibflächenelement 84 radial innen eine Mehrzahl von durch Verschlusskappen 90 verschlossenen Durchgriffsöffnungen vorgesehen. Das Reibflächenelement 84 ist mit dem Hohlrad 82 beispielsweise durch Vernietung fest verbunden und ist radial innen vermittels eines Lagers 88 auf einem axial sich erstreckenden Ansatz des Deckscheibenelements 46 drehbar gelagert und dort auch axial abgestützt. In seinem radial äußeren Bereich ist das abtriebsseitige Hohlrad 82 vermittels eines weiteren Lagers 200 bezüglich des antriebsseitigen Hohlrads 80, welches das abtriebsseitige Hohlrad 82 axial übergreift, drehbar abgestützt. An einem nach radial außen sich erstreckenden Abschnitt des antriebsseitigen Hohlrads 80 kann eine die sekundärseitige Masse der Phasenschieberanordnung 26 erhöhende Zusatzmasse 202 beispielsweise durch Vernietung festgelegt sein.

Das Zentralscheibenelement 54 der Phasenschieberanordnung 26 ist auf einen Außenumfangsbereich des antriebsseitigen Hohlrads 80 aufgesetzt und damit drehfest verbunden. Dies kann durch Presspassung, durch Formschluss (Steckverzahnung oder dergleichen) oder Reibschluss erfolgen. Auch eine Schweißverbindung des Zentralscheibenelements 54 mit dem antriebsseitigen Hohlrad 80 ist möglich.

In einem Bereich radial außerhalb des Lagers 200 ist das antriebsseitige Hohlrad 80 bezüglich des Deckscheibenelements 48 durch ein Dichtungselement 204 fluiddicht angeschlossen, so dass ein dichter Abschluss für den die Dämpferfedern 52 des Schwingungssystems 32 aufnehmenden Volumenbereich erhalten werden kann.

In diesem Volumenbereich kann ein Fluid (niedrig- oder höherviskos), ein Haftschmiermittel oder ein anderes viskoses Medium vorgesehen sein, so dass gleichzeitig auch die Funktionalität einer Fluiddämpfung bei Relativdrehung der Primärseite 28 bezüglich der Sekundärseite 30 erreicht werden kann.

Es sei hier darauf hingewiesen, dass die in den verschiedenen Bereichen eingesetzten Lager selbstverständlich sowohl als Gleit- als auch als Wälzkörperlager ausgebildet sein können. Bei Ausgestaltung mit Wälzkörperlagern können diese vorzugsweise gekapselt ausgebildet sein, um gleichzeitig auch dort, wo jeweilige Lagerstellen gebildet sind, einen fluiddichten Abschluss erlangen zu können, also beispielsweise auch im Bereich der Lager 88 und 200.

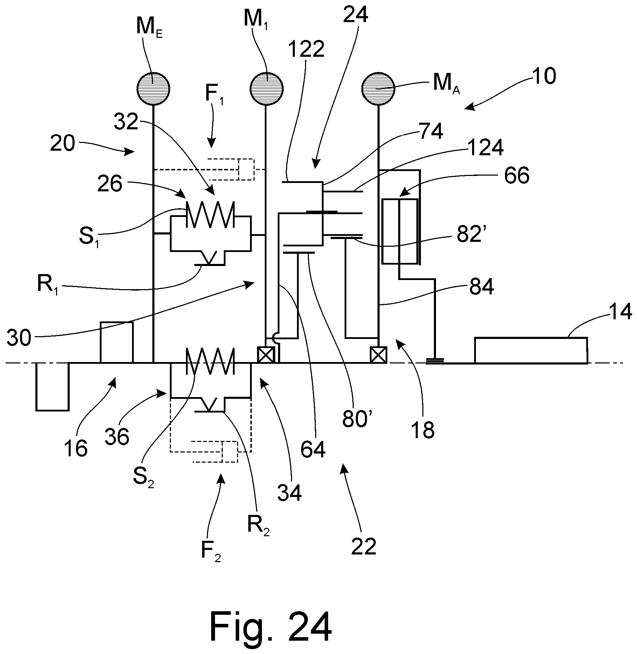

Die Fig. 24 zeigt eine Ausgestaltung einer Drehschwingungsdämpfungsanordnung 10, bei welcher beispielsweise in den beiden Drehmomentübertragungswegen 20 und 22 wieder jeweilige Phasenschieberanordnungen 26, 34 mit Schwingungssystemen 32, 36 vorgesehen sind. Selbstverständlich könnte auch hier nur im ersten Drehmomentübertragungsweg 20 eine Phasenschieberanordnung 26 vorgesehen sein, während der zweite Drehmomentübertragungsweg 22 vergleichsweise steif ausgebildet sein kann.

Im zweiten Drehmomentübertragung 22 ist der Planetenradträger 64 mit den in Umfangsrichtung daran verteilt liegenden Planetenrädern 74, hier mit Verzahnungen 122, 124 mit unterschiedlichem Durchmesser, vorgesehen. Die Kopplungsanordnung 24 bzw. die Planetengetriebeanordnung 66 weist bei dieser Ausgestaltungsform mit den Planentenrädern 74 zusammenwirkende Sonnenräder 80' und 82' auf. Ein an die Sekundärseite 30 des Schwingungssystems 32 angekoppeltes antriebsseitiges Sonnenrad 80' steht in Kämmeingriff mit den Verzahnungen 122, während ein beispielsweise an ein Reibflächenelement 84 einer Reibungskupplung bzw. den Ausgangsbereich 18 angekoppeltes abtriebsseitiges Sonnenrad 82' mit den Verzahnungen 124 der Planetenräder 74 in Kämmeingriff steht.

Durch das Vorsehen einer Planetengetriebeanordnung 66 mit einem antriebsseitigen Sonnenrad 80' und einem abtriebsseitigen Sonnenrad 82' wird vor allem die Ausnutzung des radial inneren Bauraums unterstützt.

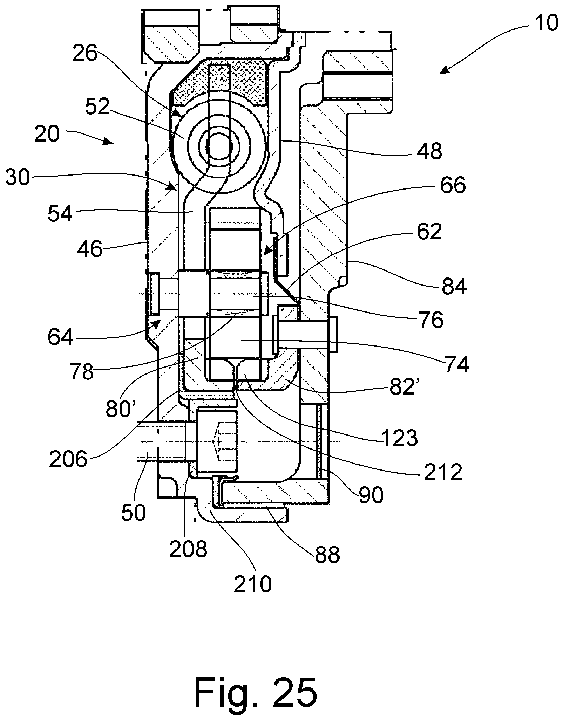

Eine konstruktive Ausführung einer derartigen Drehschwingungsdämpfungsanordnung 10 ist in Fig. 25 gezeigt. Man erkennt, dass das sekundärseitige Zentralscheibenelement 54 sich weiter nach radial innen erstreckt, die Tragebolzen 76 der Planetenräder 74 nach radial innen hin übergreift und dort das antriebsseitige Sonnenrad 80' bereitstellt. Um eine Umfangsrelativbewegung zwischen diesem Sonnenrad 80', also dem Zentralscheibenelement 54', und den Tragebolzen 76 zu ermöglichen, weist das Deckscheibenelement 54 im radialen Bereich dieser Tragebolzen 76 entsprechende Umfangsaussparungen auf.

Das abtriebsseitige Sonnenrad 82' ist beispielsweise durch Vernietung mit dem Reibflächenelement 84 fest verbunden. Zusammen mit dem antriebsseitigen Sonnenrad 80' ist es in Kämmeingriff mit den hier ungestuft ausgebildeten Verzahnungen 123 der in Umfangsrichtung verteilt liegenden Planetenräder 74. Auch hier kann ein von 1 verschiedenes Übersetzungsverhältnis beispielsweise durch unterschiedliche Profilverschiebung der Verzahnungen der Sonnenräder 80' und 82' erreicht werden.

Das durch die Schraubbolzen 50 an eine Antriebswelle oder dergleichen anzubindende Deckscheibenelement 46 bildet mit seinem radial inneren Bereich gleichermaßen den Planetenradträger 64, in dem die Tragebolzen 76 durch Vernietung oder dergleichen festgelegt sind. Das Zentralscheibenelement 54 bzw. das damit integral ausgebildete antriebsseitige Sonnenrad 80' ist über ein beispielsweise als Gleitlagerung ausgebildetes Lager 206 axial bezüglich des Deckscheibenelements 46 und radial an einem durch die Schraubbolzen 50 festgelegten, beispielsweise ringartigen Abstützelement 208 gelagert. Das abtriebsseitige Sonnenrad 82' ist vermittels des Reibflächenelements 84 über das Radiallager 88 und beispielsweise ein Axiallager 210 bezüglich des Deckscheibenelements 46 axial und radial abgestützt bzw. gelagert.

Um einen fluiddichten Abschluss des die Dämpferfedern 52 enthaltenden Volumenbereichs zu erreichen, kann ein als vorgespannt eingebautes Blechelement aufgebautes vorspannelement 62 wirken, das zusammen mit dem Sonnenrad 82' an dem Reibflächenelement 84 festgelegt sein kann und radial außen am Deckscheibenelement 48 abgestützt ist. Axial zwischen den beiden Sonnenrädern 80' und 82' kann ein weiteres Dichtelement 212 diesen Volumenbereich nach radial innen hin dicht abschließen.

Es ist selbstverständlich, dass bei dieser Ausgestaltungsform das antriebsseitige Sonnenrad 80' auch von der Sekundärseite 30 bzw. dem Zentralscheibenelement 54 getrennt ausgebildet und damit beispielsweise durch Vernietung, Verschweißung oder Verschraubung fest verbunden sein kann. Gleichermaßen könnte selbstverständlich das abtriebsseitige Sonnenrad 82' mit dem Reibflächenelement 84' oder einem sonstigen Schwungmassenelement integral ausgebildet sein.

Es ist darauf hinzuweisen, dass bei dieser Ausgestaltungsform, ebenso wie bei den mit Hohlrädern aufgebauten Ausgestaltungsformen die an den Sonnenrädern bzw. Hohlrädern vorgesehenen Verzahnungen als Geradeverzahnungen oder als Schrägverzahnungen ausgebildet sein können. Insbesondere dort, wo gestuft ausgebildete Planetenräder 74 mit zwei Verzahnungen 122, 124 eingesetzt werden, können in Zuordnung zum antriebsseitigen Hohlrad/Sonnenrad und in Zuordnung zum abtriebsseitigen Hohlrad/Sonnenrad selbstverständlich auch unterschiedliche Verzahnungsgeometrien eingesetzt werden.

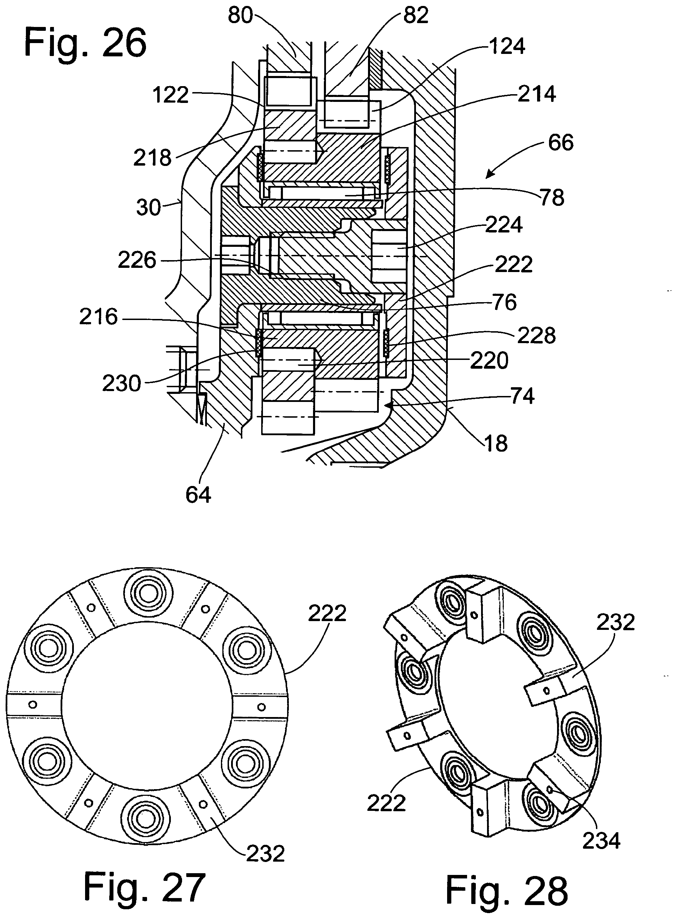

Die Fig. 26 bis 28 zeigen die Ausgestaltung eines Planetenradträgers, die bei den verschiedenen vorangehend auch beschriebenen Ausgestaltungsvarianten der Planetengetriebeanordnung 66 zum Einsatz kommen kann. Man erkennt in Fig. 26 den Planetenradträger 64 mit einem daran drehbar getragenen Planetenrad 74. dieses Planetenrad 74 ist zweistufig mit Verzahnungen 122, 124 unterschiedlichen Durchmessers ausgebildet. Das Planetenrad 74 ist zweiteilig ausgebildet ist, wobei an dem die Verzahnung 124 aufweisenden Zahnradteil 214 ein zylindrischer Axialansatz 216 vorgesehen ist, auf welchem das die Verzahnung 122 aufweisende Zahnradteil 218 getragen ist. Durch Haltestifte 220 sind diese beiden Zahnradteile 214, 218 miteinander fest, insbesondere drehfest, verbunden.

An den vom Planetenradträger 64 entfernt liegenden axialen Enden der Tragebolzen 76 ist ein Stützring 222 durch Schraubbolzen 224 oder dergleichen festgelegt, welche in Gewindeöffnungen 226 der Tragbolzen 76 eingeschraubt sind. Der Stützring 222 verbindet somit vorzugsweise alle Tragebolzen 76, so dass diese unter Lasteinwirkung gegen in Umfangsrichtung gerichtete oder in radialer Richtung gerichtete Ausweichbewegung gesichert sind. Dies führt zu einer Versteifung der Planetengetriebeanordnung 66 im Bereich des Planetenradträgers 64. Dies hat zur Folge, dass die verschiedenen in Kämmeingriff stehenden Verzahnungen hinsichtlich ihres Verzahnungseingriffs optimiert gehalten sind und somit verschleißinduzierende Reibeffekte vermindert bzw. ausgeschlossen werden können. Aufgrund der Minderung bzw. des Ausschlusses von Reibeffekten wird fernerhin eine nachteilhafte Beeinflussung des Schwingungsdämpfungsverhaltens vermieden.

Man erkennt in Fig. 26 weiter, dass an den einander zugewandt liegenden Seiten des Stützrings 22 einerseits und des Planetenradträgers 64 andererseits die Tragebolzen 76 umgebende Anlaufringe 228, 230 vorgesehen sein können, an welchen die Planetenräder 74 sich axial abstützen können. Ferner kann der Stützring 222 in seinen in Umfangsrichtung zwischen aufeinander folgenden Planetenrädern 74 liegenden Bereichen mit Axialstegen 232 versehen sein, die sich in den Umfangsbereich zwischen den Planetenrädern 74 hineinerstrecken und bis zum Planetenradträger 64 reichen können. Es können durch den Planetenradträger 64 hindurch dann Befestigungsorgane in Öffnungen 234 dieser Stege 232 eingesetzt werden, so dass eine erhöhte Stabilität in der Anbindung des Stützrings 222 erreicht werden kann.

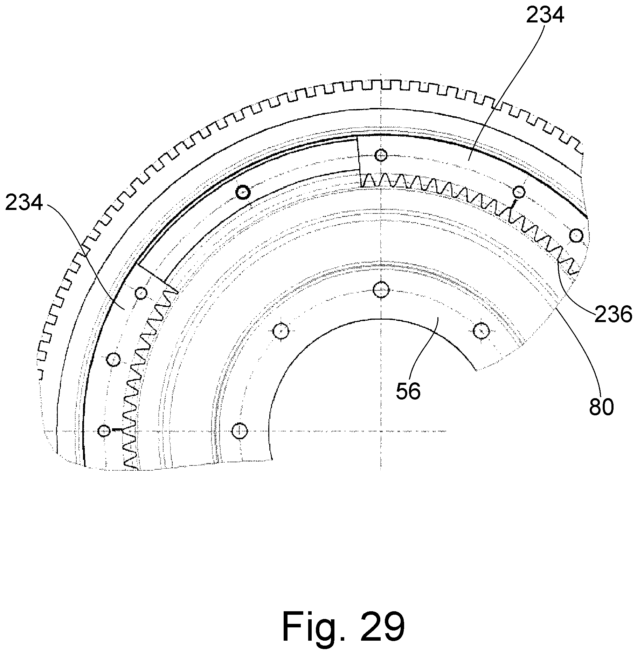

Die Fig. 29 zeigt am Beispiel eines antriebsseitigen Hohlrads 80 die Ausgestaltung desselben mit einer Mehrzahl von in Umfangsrichtung verteilt liegenden Hohlradsegmenten 234. Diese sind an einem ringartigen Bauteil, beispielsweise dem in Fig. 4 erkennbaren sekundärseitigen Masseteil 56, durch Verschraubung oder/und Verschweißung oder/und sonstige Befestigungsorgane, wie z. B. Befestigungsstifte oder dergleichen, festgelegt. Die Hohlradsegmente 234, welche die mit den Planetenrädern 74 zusammenwirkende Verzahnung 236 bereitstellen, sind an denjenigen Umfangsbereichen positioniert, an welchen auch die Planetenräder 74 liegen. Die Umfangserstreckung der Hohlradsegmente 234 kann beschränkt sein auf die Umfangsbereiche, in welchen das antriebsseitige Hohlrad 80 und die Planetenräder 74 sich in Umfangsrichtung bezüglich einander verlagern.

Die Ausgestaltung der antriebsseitigen Hohlrads 80 mit derartigen Hohlradsegmenten bringt verschiedene Vorteile mit sich. So ist es beispielsweise möglich, für die jeweils auftretenden Anforderungen optimierte Materialien einzusetzen. Insbesondere können die Hohlradsegmente 234 aus vergleichsweise hartem und somit verschleißfestem Material aufgebaut sein. Auch kann somit das antriebsseitige Hohlrad 80 in vergleichsweise einfacher Weise aus beispielsweise einem scheibenartigen Bauteil und den einzelnen Hohlradsegmenten zusammengesetzt werden. Das Einarbeiten einer Verzahnung in ein größeres, scheibenartiges Bauteil ist nicht erforderlich. Auch ist es somit möglich, Hohlradsegmente mit zueinander verschiedener Profilverschiebung der dort jeweils gebildeten Verzahnungen 236 vorzusehen, was eine Anpassbarkeit der in der Kopplungsanordnung 24 bereitgestellten Übersetzung ermöglicht.

Es sei darauf hingewiesen, dass selbstverständlich auch das abtriebsseitige Hohlrad 82 in den verschiedenen vorangehend und auch nachfolgend noch erläuterten Ausgestaltungsformen mit derartigen Hohlradsegmenten ausgebildet sein kann. Auch in dem Falle, dass die Planetengetriebeanordnung mit Sonnenrädern ausgebildet ist, ist eine derartige Segmentierung der daran gebildeten Verzahnung möglich. Derartige segmentierte Verzahnungen können auch mit in segmentierter Art und Weise aufgebauten Planetenrädern 74 zusammenwirken, wie sie beispielsweise in Fig. 6 gezeigt sind.

Es sei weiter darauf hingewiesen, dass bei den vorangehend beschriebenen und nachfolgend noch erläuterten Ausgestaltungsformen selbstverständlich die Planetenräder 74 und ggf. auch Hohlradsegmente oder Sonnenradsegmente in Umfangsrichtung mit gleichmäßigem Abstand, also Winkelabstand, angeordnet sein können. Dies ist aus Symmetriegründen und zum Vermeiden von Unwuchten ein besonders vorteilhafter Aufbau. Grundsätzlich ist es aber auch möglich, den Umfangsabstand der Planetenräder 74 zu variieren, so dass nicht jedes Planetenrad zu dem bzw. den in Umfangsrichtung unmittelbar benachbarten Planetenrädern jeweils den gleichen Abstand aufweist. So hat sich beispielsweise gezeigt, dass bei beispielsweise drei Planetenrädern ein sich jeweils von 120° unterscheidender Umfangsabstand, also eine unregelmäßige Anordnung, hinsichtlich der Geräuschentwicklung der in Eingriff miteinander stehenden Verzahnungen vorteilhaft ist. Bei anderen Anzahlen an Planetenrädern kann selbstverständlich ebenfalls eine derartige von einer regelmäßigen Umfangsabfolge abweichende Anordnung vorgesehen werden.

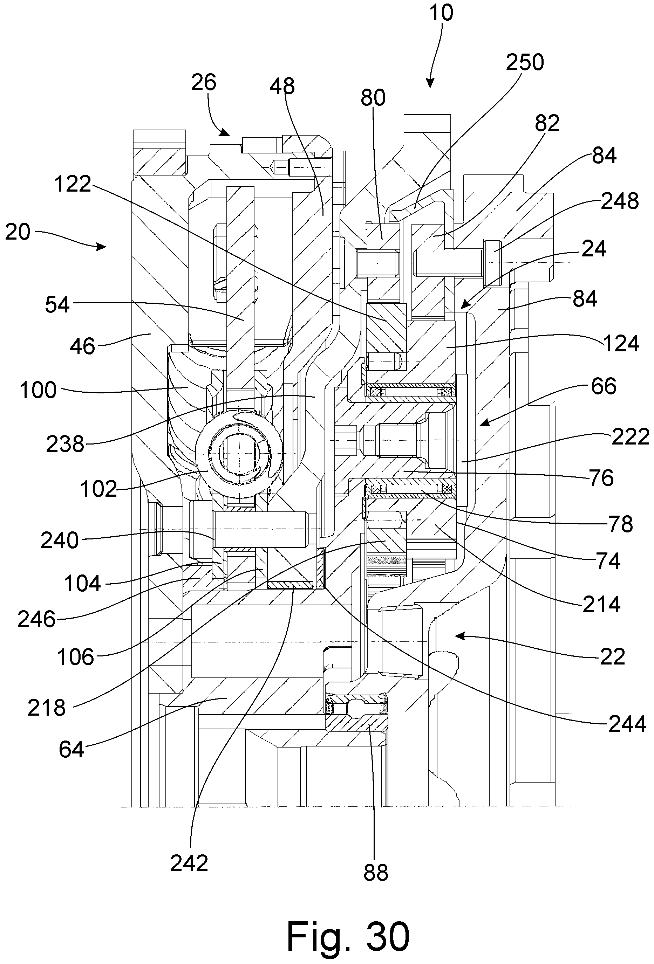

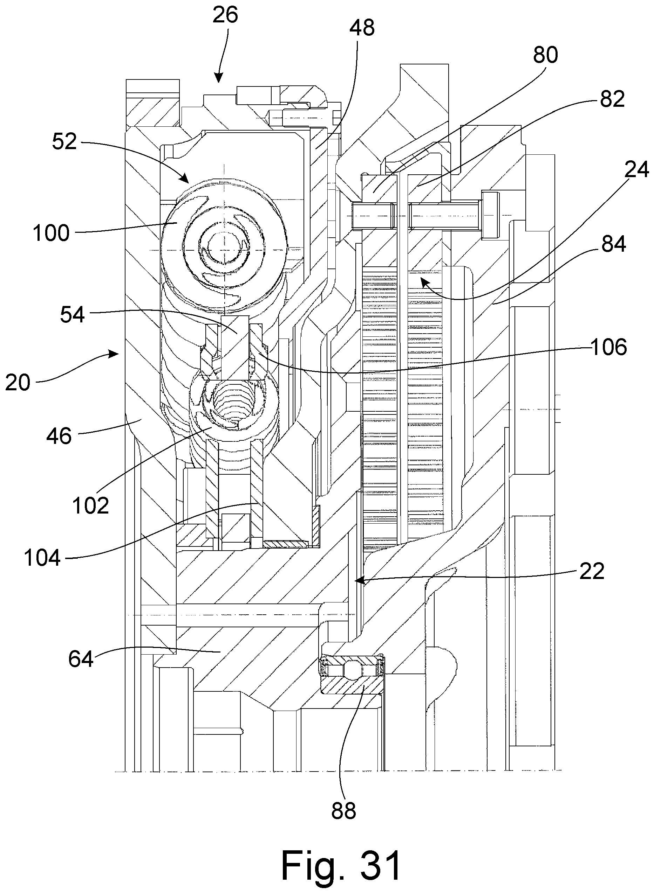

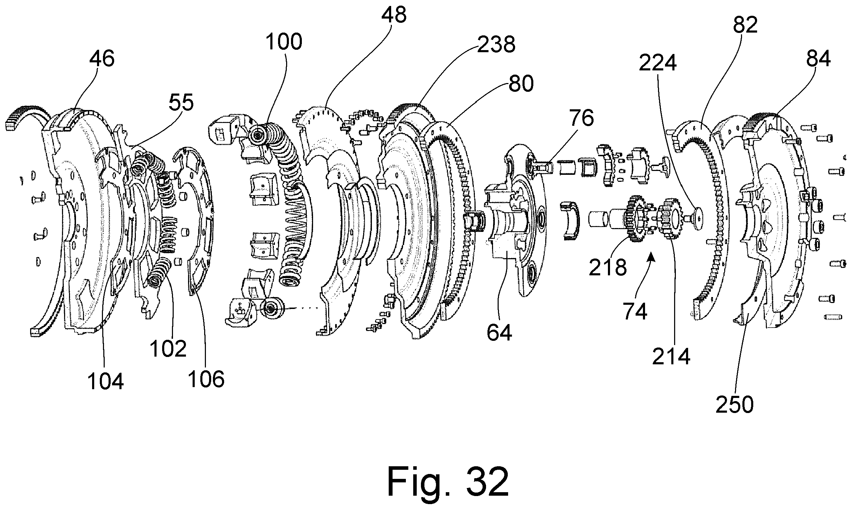

Die Fig. 30 bis 32 zeigen eine Ausgestaltungsart einer Drehschwingungsdämpfungsanordnung 10, die in prinzipieller Weise dem vorangehend mit Bezug auf die Fig. 7 beschriebenen Aufbau entspricht. Man erkennt insbesondere in Fig. 30, dass der Planetenradträger 64 mit den daran getragenen Planetenrädern 74 den in Fig. 26 gezeigten Aufbau aufweist, also die Planetenräder 74 zweiteilig und gestuft ausgebildet sind und der Planetenradträger 64 durch den Stützring 222 versteift ist.

Weiter ist erkennbar, dass das antriebsseitige Hohlrad 80 beispielsweise durch Verschraubung, ggf. aber auch durch Vernietung, Verschweißung oder dergleichen an einem ringscheibenartig ausgebildeten Hohlradträger 238 festgelegt ist. Die Ausgestaltung mit Verschraubung hat den Vorteil eines besonders einfachen Aufbaus und bietet die Möglichkeit, ggf. zur Durchführung von Reparaturen das Hohlrad 80 wieder leicht zu entfernen.

Radial innen ist der Hohlradträger 238 durch eine Mehrzahl von Schraubbolzen 240 mit den beiden Deckscheibenelementen 104, 106 fest verbunden, welche Schraubbolzen 240 das Zentralscheibenelement 54 mit Umfangsbewegungsspiel durchsetzen. Auch hier könnte selbstverständlich die Verbindung beispielsweise auch durch Vernietung erfolgen, wobei der Einsatz von Schraubbolzen 240 sich beim Zusammenaufbau und ggf. auch bei Reparaturarbeiten als besonders vorteilhaft darstellt. In seinem radial inneren Bereich ist der Hohlradträger 238 durch beispielsweise mit Gleitlagerringen ausgebildete Lager 242, 244 am Planetenradträger 64 radial und axial abgestützt. Hier können selbstverständlich auch Wälzkörperlager zum Einsatz kommen. In Richtung auf das Deckscheibenelement 46 zu ist der Hohlradträger 238 über das dem Deckscheibenelement 46 benachbart liegende Deckscheibenelement 104 und einen Lagerring 246 axial abgestützt.

Die Planetenräder 74 können hier, selbstverständlich auch bei den anderen Ausgestaltungsformen, über eine Nadellager umfassende Lagerung 78 an den Tragebolzen 76 drehbar getragen sein, wobei diese Nadellager beispielsweise abgedichtet ausgeführt sein können.

Das abtriebsseitige Hohlrad 82 ist als separates Bauteil mit dem Reibflächenelement 84, also beispielsweise einer Schwungscheibe einer Reibungskupplung, durch Schraubbolzen 248 fest verbunden. Zusammen mit dem abtriebsseitigen Hohlrad 82 ist ein beispielsweise als Blechmaterial ausgeführtes Dichtelement 250 durch die Schraubbolzen 248 festgelegt. Dieses Dichtelement 250 liegt mit geringem Abstand oder unter leichtem Druck, ggf. über eine Dichtlippe am Außenumfang des antriebsseitigen Hohlrads 80 an, so dass der die Planetengetriebeanordnung 66 enthaltende Volumenbereich gekapselt ist.

Ein besonderer Vorteil der in den Fig. 30 bis 32 gezeigten Ausgestaltungsform ist, dass diese Drehschwingungsdämpfungsanordnung mit einer herkömmlichen Kurbelwellenverschraubung an eine Kurbelwelle oder eine sonstige Antriebswelle angeschraubt werden kann, ohne dass hier weitere Anpassungsmaßnahmen erforderlich sind. Insofern ist es leicht möglich, diese Drehschwingungsdämpfungsanordnung in einen herkömmlich aufgebauten Antriebsstrang zu integrieren.

## Patentansprüche

1. Drehschwingungsdämpfungsanordnung, insbesondere für den Antriebsstrang eines Fahrzeugs, umfassend einen zur Drehung um eine Drehachse (A) anzutreibenden Eingangsbereich (16) und einen Ausgangsbereich (18), wobei zwischen dem Eingangsbereich (16) und dem Ausgangsbereich (18) ein erster Drehmomentübertragungsweg (20) vorgesehen ist,
**dadurch gekennzeichnet,**
**dass** parallel zum ersten Drehmomentübertragungsweg (20) ein zweiter Drehmomentübertragungsweg (22) vorgesehen ist, wobei das zwischen dem Eingangsbereich (16) und dem Ausgangsbereich (18) übertragene Drehmoment zur Übertagung über den ersten Drehmomentübertragungsweg (20) und den zweiten Drehmomentübertragungsweg (22) aufgeteilt wird,
**dass** eine Kopplungsanordnung (24) zur Überlagerung der über die Drehmomentübertragungswege (20, 22) geleiteten Drehmomente und zur Weiterleitung der überlagerten Drehmomente zum Ausgangsbereich (18) vorgesehen ist,
**dass** im ersten Drehmomentübertragungsweg (20) eine erste Phasenschieberanordnung (26) zur Erzeugung einer Phasenverschiebung von über den ersten Drehmomentübertragungsweg (20) geleiteten Drehungleichförmigkeiten bezüglich über den zweiten Drehmomentübertragungsweg (22) geleiteten Drehungleichförmigkeiten vorgesehen ist.

2. Drehschwingungsdämpfungsanordnung nach Anspruch 1, **dadurch gekennzeichnet, dass** die erste Phasenschieberanordnung (26) ein erstes Schwingungssystem (32) mit einer Primärseite (28) und einer gegen die Wirkung einer Federanordnung (52) bezüglich der Primärseite (28) um die Drehachse (A) drehbaren Sekundärseite (30) umfasst.

3. Drehschwingungsdämpfungsanordnung nach Anspruch 1 oder 2, **dadurch gekennzeichnet, dass** im zweiten Drehmomentübertragungsweg (22) eine zweite Phasenschieberanordnung (34) vorgesehen ist.

4. Drehschwingungsdämpfungsanordnung nach Anspruch 3, **dadurch gekennzeichnet, dass** die zweite Phasenschieberanordnung (34) ein zweites Schwingungssystem (36) mit einer Primärseite (38) und einer gegen die Wirkung einer Federanordnung (118) bezüglich der Primärseite (38) um die Drehachse (A) drehbaren Sekundärseite (40) umfasst.

5. Drehschwingungsdämpfungsanordnung nach Anspruch 4, **dadurch gekennzeichnet, dass** das erste Schwingungssystem (32) und das zweite Schwingungssystem (36) zueinander unterschiedliche Resonanzfrequenzen aufweisen.

6. Drehschwingungsdämpfungsanordnung nach Anspruch 5, **dadurch gekennzeichnet, dass** die Resonanzfrequenz des ersten Schwingungssystems (32) unter der Resonanzfrequenz des zweiten Schwingungssystems (36) liegt.

7. Drehschwingungsdämpfungsanordnung nach einem der Ansprüche 1 bis 6, **dadurch gekennzeichnet, dass** der erste Drehmomentübertragungsweg (20) oder/und der zweite Drehmomentübertragungsweg (20) mit einer Reibungsdämpfungsanordnung (R₁, R₂) oder/und einer Fluiddämpfungsanordnung (F₁, F₂) für über diesen Drehmomentübertragungsweg (20, 22) geleitete Drehungleichförmigkeiten ausgebildet ist.

8. Drehschwingungsdämpfungsanordnung nach Anspruch 7, **dadurch gekennzeichnet, dass** die Reibungsdämpfungsanordnung (R₁, R₂) und die Fluiddämpfungsanordnung (F₁, F₂) zueinander parallel oder seriell wirkend angeordnet sind.

9. Drehschwingungsdämpfungsanordnung nach Anspruch 2 oder 4 und Anspruch 7 oder 8, **dadurch gekennzeichnet, dass** die Reibungsdämpfungsanordnung (R₁, R₂) oder/und die Fluiddämpfungsanordnung (F₁, F₂) zu der Federanordnung (52, 118) parallel oder seriell wirkend angeordnet ist.

10. Drehschwingungsdämpfungsanordnung nach einem der Ansprüche 1 bis 9, **dadurch gekennzeichnet, dass** die Kopplungsanordnung (24) eine Planetengetriebeanordnung (66) umfasst.

11. Drehschwingungsdämpfungsanordnung nach Anspruch 10,
**dadurch gekennzeichnet, dass** die Planetengetriebeanordnung (66) einen an den zweiten Drehmomentübertragungsweg (22) angebundenen Planetenradträger (64) mit einer Mehrzahl von daran drehbar getragenen Planetenrädern (74) umfasst.

12. Drehschwingungsdämpfungsanordnung nach Anspruch 11,
**dadurch gekennzeichnet, dass** die Planetengetriebeanordnung (66) eine an den ersten Drehmomentübertragungsweg (20) angebundene erste Hohlradanordnung (80; 164) in Kämmeingriff mit den Planetenrädern (74) und eine an den Ausgangsbereich (18) angebundene zweite Hohlradanordnung (82; 166) in Kämmeingriff mit den Planetenrädern (74) umfasst.

13. Drehschwingungsdämpfungsanordnung nach Anspruch 11,
**dadurch gekennzeichnet, dass** Planetengetriebeanordnung (66) eine an den ersten Drehmomentübertragungsweg (20) angebundene erste Sonnenradanordnung (80') in Kämmeingriff mit den Planetenrädern (74) und eine an den Ausgangsbereich (18) angebundene zweite Sonnenradanordnung (82') in Kämmeingriff mit den Planetenrädern (74) umfasst.

14. Drehschwingungsdämpfungsanordnung nach Anspruch 12 oder 13, **dadurch gekennzeichnet, dass** die erste Hohlradanordnung (80) oder Sonnenradanordnung (80') in Verbindung mit den Planetenrädern (74) und die zweite Hohlradanordnung (82) oder Sonnenradanordnung (82') in Verbindung mit den Planetenrädern (74) zueinander unterschiedliche Übersetzungsverhältnisse bereitstellen.

15. Drehschwingungsdämpfungsanordnung nach einem der Ansprüche 11 bis 14, **dadurch gekennzeichnet, dass** wenigstens ein Planetenrad (74) oder/und die Hohlradanordnung (80; 164) oder/und die Sonnenradanordnung (80') segmentzahnradartig ausgebildet ist.

16. Drehschwingungsdämpfungsanordnung nach einem der Ansprüche 11 bis 15, **dadurch gekennzeichnet, dass** die Planetenräder (74) mit im Wesentlichen gleichmäßigem Umfangsabstand zueinander angeordnet sind.

17. Drehschwingungsdämpfungsanordnung nach einem der Ansprüche 11 bis 15, **dadurch gekennzeichnet, dass** die Planetenräder (74) mit ungleichmäßigem Umfangsabstand zueinander angeordnet sind.

18. Drehschwingungsdämpfungsanordnung nach einem der Ansprüche 1 bis 17, **dadurch gekennzeichnet, dass** die Kopplungsanordnung (24) radial innerhalb der ersten Phasenschieberanordnung (26) oder/und der zweiten Phasenschieberanordnung (34) und sich damit wenigstens teilweise axial überlappend angeordnet ist.

19. Drehschwingungsdämpfungsanordnung nach einem der Ansprüche 1 bis 17, **dadurch gekennzeichnet, dass** die Kopplungsanordnung (24) axial neben der ersten Phasenschieberanordnung (26) oder/und der zweiten Phasenschieberanordnung (34) angeordnet ist.

20. Drehschwingungsdämpfungsanordnung nach einem der Ansprüche 1 bis 19, **dadurch gekennzeichnet, dass** der zweite Drehmomentübertragungsweg (22) eine Steifigkeit von wenigstens 800 Nm/°, vorzugsweise wenigstens 1500 Nm/°, aufweist.

21. Drehschwingungsdämpfungsanordnung nach einem der Ansprüche 1 bis 20, **dadurch gekennzeichnet, dass** ein Verhältnis eines Massenträgheitsmomentes (M_{E}) des Eingangsbereichs (16) zu einem Massenträgheitsmoment (M₁) im ersten Drehmomentübertragungsweg (20) im Bereich von 1 bis 10 liegt oder/und dass ein Verhältnis eines Massenträgheitsmoments (M₁) im ersten Drehmomentübertragungsweg (20) zu einem Massenträgheitsmoment (M₂) im zweiten Drehmomentübertragungsweg (22) im Bereich von 2 bis 20 liegt.

22. Hybridantriebsmodul, umfassend eine Drehschwingungsdämpfungsanordnung (10) nach einem der Ansprüche 1 bis 21.

23. Hydrodynamische Kopplungsanordnung, insbesondere hydrodynamischer Drehmomentwandler, umfassend eine Drehschwingungsdämpfungsanordnung (10) nach einem der Ansprüche 1 bis 21.

24. Antriebssystem für ein Fahrzeug, umfassend ein Antriebsaggregat und eine Drehschwingungsdämpfungsanordnung (10) nach einem der Ansprüche 1 bis 21, wobei der Eingangsbereich (16) durch eine Antriebswelle (44) des Antriebsaggregats zur Drehung um die Drehachse (A) antreibbar ist.

25. Antriebssystem nach Anspruch 2 und Anspruch 24, **dadurch gekennzeichnet, dass** eine Resonanzstelle des ersten Schwingungssystems (32) unter oder nahe der Leerlaufdrehzahl des Antriebsaggregats ist.

26. Antriebssystem nach Anspruch 4 und Anspruch 24 oder 25,
**dadurch gekennzeichnet, dass** eine Resonanzstelle des zweiten Schwingungssystems (36) über oder nahe der maximalen Drehzahl des Antriebsaggregats ist.

## Claims

1. Torsional vibration damping arrangement, in particular for the drive train of a vehicle, comprising an input region (16), which is to be driven for rotation about a rotational axis (A), and an output region (18), a first torque transmission path (20) being provided between the input region (16) and the output region (18), **characterized**
**in that** a second torque transmission path (22) is provided parallel to the first torque transmission path (20), the torque which is transmitted between the input region (16) and the output region (18) being split for transmission via the first torque transmission path (20) and the second torque transmission path (22),
**in that** a coupling arrangement (24) is provided for superimposing the torques which are conducted via the torque transmission paths (20, 22) and for forwarding the superimposed torques to the output region (18), and in that a first phase shifter arrangement (26) is provided in the first torque transmission path (20) for generating a phase shift of rotational non-uniformities which are conducted via the first torque transmission path (20) with regard to rotational non-uniformities which are conducted via the second torque transmission path (22).

2. Torsional vibration damping arrangement according to Claim 1, **characterized in that** the first phase shifter arrangement (26) comprises a first vibration system (32) with a primary side (28) and a secondary side (30) which can be rotated about the rotational axis (A) with regard to the primary side (28) counter to the action of a spring arrangement (52).

3. Torsional vibration damping arrangement according to Claim 1 or 2, **characterized in that** a second phase shifter arrangement (34) is provided in the second torque transmission path (22).

4. Torsional vibration damping arrangement according to Claim 3, **characterized in that** the second phase shifter arrangement (34) comprises a second vibration system (36) with a primary side (38) and a secondary side (40) which can be rotated about the rotational axis (A) with regard to the primary side (38) counter to the action of a spring arrangement (118).

5. Torsional vibration damping arrangement according to Claim 4, **characterized in that** the first vibration system (32) and the second vibration system (36) have different resonant frequencies from one another.

6. Torsional vibration damping arrangement according to Claim 5, **characterized in that** the resonant frequency of the first vibration system (32) lies below the resonant frequency of the second vibration system (36) .

7. Torsional vibration damping arrangement according to one of Claims 1 to 6, **characterized in that** the first torque transmission path (20) and/or the second torque transmission path (20) are/is configured with a friction damping arrangement (R₁, R₂) and/or a fluid damping arrangement (F₁, F₂) for rotational non-uniformities which are conducted via the said torque transmission path (20, 22).

8. Torsional vibration damping arrangement according to Claim 7, **characterized in that** the friction damping arrangement (R₁, R₂) and the fluid damping arrangement (F₁, F₂) are arranged so as to act in parallel or in series with respect to one another.

9. Torsional vibration damping arrangement according to Claim 2 or 4 and Claim 7 or 8, **characterized in that** the friction damping arrangement (R₁, R₂) and/or the fluid damping arrangement (F₁, F₂) are/is arranged so as to act in parallel or in series with respect to the spring arrangement (52, 118).

10. Torsional vibration damping arrangement according to one of Claims 1 to 9, **characterized in that** the coupling arrangement (24) comprises a planetary gear mechanism arrangement (66).

11. Torsional vibration damping arrangement according to Claim 10, **characterized in that** the planetary gear mechanism arrangement (66) comprises a planetary gear carrier (64) which is attached to the second torque transmission path (22) and has a plurality of planetary gears (74) which are supported rotatably thereon.

12. Torsional vibration damping arrangement according to Claim 11, **characterized in that** the planetary gear mechanism arrangement (66) comprises a first internal gear arrangement (80; 164) which is attached to the first torque transmission path (20) and is in meshing engagement with the planetary gears (74), and a second internal gear arrangement (82; 166) which is attached to the output region (18) and is in meshing engagement with the planetary gears (74).

13. Torsional vibration damping arrangement according to Claim 11, **characterized in that** the planetary gear mechanism arrangement (66) comprises a first sun gear arrangement (80') which is attached to the first torque transmission path (20) and is in meshing engagement with the planetary gears (74), and a second sun gear arrangement (82') which is attached to the output region (18) and is in meshing engagement with the planetary gears (74).

14. Torsional vibration damping arrangement according to Claim 12 or 13, **characterized in that** the first internal gear arrangement (80) or sun gear arrangement (80'), in conjunction with the planetary gears (74), and the second internal gear arrangement (82) or sun gear arrangement (82'), in conjunction with the planetary gears (74), provide different transmission ratios from one another.

15. Torsional vibration damping arrangement according to one of Claims 11 to 14, **characterized in that** at least one planetary gear (74) and/or the internal gear arrangement (80; 164) and/or the sun gear arrangement (80') are/is configured in the manner of a gearwheel segment.

16. Torsional vibration damping arrangement according to one of Claims 11 to 15, **characterized in that** the planetary gears (74) are arranged at a substantially homogeneous circumferential spacing from one another.

17. Torsional vibration damping arrangement according to one of Claims 11 to 15, **characterized in that** the planetary gears (74) are arranged at an inhomogeneous circumferential spacing from one another.

18. Torsional vibration damping arrangement according to one of Claims 1 to 17, **characterized in that** the coupling arrangement (24) is arranged radially within the first phase shifter arrangement (26) and/or the second phase shifter arrangement (34) and therefore so as to axially overlap at least partially.

19. Torsional vibration damping arrangement according to one of Claims 1 to 17, **characterized in that** the coupling arrangement (24) is arranged axially next to the first phase shifter arrangement (26) and/or the second phase shifter arrangement (34).

20. Torsional vibration damping arrangement according to one of Claims 1 to 19, **characterized in that** the second torque transmission path (22) has a stiffness of at least 800 Nm/°, preferably at least 1500 Nm/°.

21. Torsional vibration damping arrangement according to one of Claims 1 to 20, **characterized in that** a ratio of a mass moment of inertia (M_{E}) of the input region (16) to a mass moment of inertia (M₁) in the first torque transmission path (20) lies in the range from 1 to 10, and/or **in that** a ratio of a mass moment of inertia (M₁) in the first torque transmission path (20) to a mass moment of inertia (M₂) in the second torque transmission path (22) lies in the range from 2 to 20.

22. Hybrid drive module, comprising a torsional vibration damping arrangement (10) according to one of Claims 1 to 21.

23. Hydrodynamic coupling arrangement, in particular hydrodynamic torque converter, comprising a torsional vibration damping arrangement (10) according to one of Claims 1 to 21.

24. Drive system for a vehicle, comprising a drive assembly and a torsional vibration damping arrangement (10) according to one of Claims 1 to 21, it being possible for the input region (16) to be driven for rotation about the rotational axis (A) by way of a drive shaft (44) of the drive assembly.

25. Drive system according to Claim 2 and Claim 24, **characterized in that** a resonance point of the first vibration system (32) is below or close to the idling rotational speed of the drive assembly.

26. Drive system according to Claim 4 and Claim 24 or 25, **characterized in that** a resonance point of the second vibration system (36) is above or close to the maximum rotational speed of the drive assembly.

## Revendications

1. Agencement d'amortissement des oscillations de torsion, en particulier pour la chaîne cinématique d'un véhicule, comprenant une zone d'entrée (16) devant être entraînée pour la rotation autour d'un axe de rotation (A) et une zone de sortie (18), une première voie de transfert de couple (20) étant prévue entre la zone d'entrée (16) et la zone de sortie (18),
**caractérisé en ce que**
parallèlement à la première voie de transfert de couple (20) est prévue une deuxième voie de transfert de couple (22), le couple transmis entre la zone d'entrée (16) et la zone de sortie (18) étant divisé par le biais de la première voie de transfert de couple (20) et de la deuxième voie de transfert de couple (22),
un agencement de couplage (24) est prévu pour superposer les couples guidés par le biais des voies de transfert de couple (20, 22) et pour conduire les couples superposés à la zone de sortie (18),
dans la première voie de transfert de couple (20) est prévu un premier agencement de déphasage (26) pour générer un déphasage des irrégularités de rotation transmises par le biais de la première voie de transfert de couple (20) par rapport aux irrégularités de rotation transmises par le biais de la deuxième voie de transfert de couple (22).

2. Agencement d'amortissement des oscillations de torsion selon la revendication 1, **caractérisé en ce que** le premier agencement de déphasage (26) comprend un premier système d'oscillation (32) avec un côté primaire (28) et un côté secondaire (30) pouvant tourner autour de l'axe de rotation (A) par rapport au côté primaire (28) à l'encontre de l'effet d'un agencement de ressort (52).

3. Agencement d'amortissement des oscillations de torsion selon la revendication 1 ou 2, **caractérisé en ce que** dans la deuxième voie de transfert de couple (22) est prévu un deuxième agencement de déphasage (34).

4. Agencement d'amortissement des oscillations de torsion selon la revendication 3, **caractérisé en ce que** le deuxième agencement de déphasage (34) comprend un deuxième système d'oscillation (36) avec un côté primaire (38) et un côté secondaire (40) pouvant tourner autour de l'axe de rotation (A) par rapport au côté primaire (38) à l'encontre de l'effet d'un agencement de ressort (118).

5. Agencement d'amortissement des oscillations de torsion selon la revendication 4, **caractérisé en ce que** le premier système d'oscillation (32) et le deuxième système d'oscillation (36) présentent des fréquences de résonance différentes l'un par rapport à l'autre.

6. Agencement d'amortissement des oscillations de torsion selon la revendication 5, **caractérisé en ce que** la fréquence de résonance du premier système d'oscillation (32) est en dessous de la fréquence de résonance du deuxième système d'oscillation (36).

7. Agencement d'amortissement des oscillations de torsion selon l'une quelconque des revendications 1 à 6, **caractérisé en ce que** la première voie de transfert de couple (20) et/ou la deuxième voie de transfert de couple (20) sont réalisées avec un agencement d'amortissement des frottements (R₁, R₂) et/ou avec un agencement d'amortissement fluidique (F₁, F₂) pour des irrégularités de rotation transmises par le biais de ces voies de transfert de couple (20, 22).

8. Agencement d'amortissement des oscillations de torsion selon la revendication 7, **caractérisé en ce que** l'agencement d'amortissement des frottements (R₁, R₂) et l'agencement d'amortissement fluidique (F₁, F₂) sont disposés l'un par rapport à l'autre de manière à agir en parallèle ou en série.

9. Agencement d'amortissement des oscillations de torsion selon la revendication 2 ou 4 et la revendication 7 ou 8, **caractérisé en ce que** l'agencement d'amortissement des frottements (R₁, R₂) et/ou l'agencement d'amortissement fluidique (F₁, F₂) sont disposés par rapport à l'agencement de ressort (52, 118) de manière à agir en parallèle ou en série.

10. Agencement d'amortissement des oscillations de torsion selon l'une quelconque des revendications 1 à 9, **caractérisé en ce que** l'agencement de couplage (24) comprend un agencement d'engrenage planétaire (66).

11. Agencement d'amortissement des oscillations de torsion selon la revendication 10, **caractérisé en ce que** l'agencement d'engrenage planétaire (66) comprend un porte-satellites (64) relié à la deuxième voie de transfert de couple (22), avec une pluralité de satellites (74) supportés à rotation sur celui-ci.

12. Agencement d'amortissement des oscillations de torsion selon la revendication 11, **caractérisé en ce que** l'agencement d'engrenage planétaire (66) comprend un premier agencement de couronne dentée (80 ; 164) relié à la première voie de transfert de couple (20) en engagement d'engrènement avec les satellites (74) et un deuxième agencement de couronne dentée (82 ; 166) relié à la zone de sortie (18) en engagement d'engrènement avec les satellites (74).

13. Agencement d'amortissement des oscillations de torsion selon la revendication 11, **caractérisé en ce que** l'agencement d'engrenage planétaire (66) comprend un premier agencement de roue solaire (80') relié à la première voie de transfert de couple (20) en engagement d'engrènement avec les satellites (74) et un deuxième agencement de roue solaire (82') relié à la zone de sortie (18) en engagement d'engrènement avec les satellites (74).

14. Agencement d'amortissement des oscillations de torsion selon la revendication 12 ou 13, **caractérisé en ce que** le premier agencement de couronne dentée (80) ou le premier agencement de roue solaire (80') en association avec les satellites (74) et le deuxième agencement de couronne dentée (82) ou le deuxième agencement de roue solaire (82') en association avec les satellites (74) fournissent des rapports de démultiplication différents les uns par rapport aux autres.

15. Agencement d'amortissement des oscillations de torsion selon l'une quelconque des revendications 11 à 14, **caractérisé en ce qu'**au moins un satellite (74) et/ou l'agencement de couronne dentée (80 ; 164) et/ou l'agencement de roue solaire (80') sont réalisés sous forme de roues dentées à segments.

16. Agencement d'amortissement des oscillations de torsion selon l'une quelconque des revendications 11 à 15, **caractérisé en ce que** les satellites (74) sont disposés avec un espacement périphérique essentiellement uniforme les uns par rapport aux autres.

17. Agencement d'amortissement des oscillations de torsion selon l'une quelconque des revendications 11 à 15, **caractérisé en ce que** les satellites (74) sont disposés avec un espacement périphérique non uniforme les uns par rapport aux autres.

18. Agencement d'amortissement des oscillations de torsion selon l'une quelconque des revendications 1 à 17, **caractérisé en ce que** l'agencement de couplage (24) est disposé radialement à l'intérieur du premier agencement de déphasage (26) et/ou du deuxième agencement de déphasage (34) et en l'occurrence avec un chevauchement axial au moins partie.

19. Agencement d'amortissement des oscillations de torsion selon l'une quelconque des revendications 1 à 17, **caractérisé en ce que** l'agencement de couplage (24) est disposé axialement à côté du premier agencement de déphasage (26) et/ou du deuxième agencement de déphasage (34).

20. Agencement d'amortissement des oscillations de torsion selon l'une quelconque des revendications 1 à 19, **caractérisé en ce que** la deuxième voie de transfert de couple (22) présente une rigidité d'au moins 800 Nm/°, de préférence d'au moins 1500 Nm/°.

21. Agencement d'amortissement des oscillations de torsion selon l'une quelconque des revendications 1 à 20, **caractérisé en ce qu'**un rapport d'un couple d'inertie de masse (M_{E}) de la zone d'entrée (16) à un couple d'inertie de masse (M₁) dans la première voie de transfert de couple (20) est dans une plage de 1 à 10 et/ou **en ce qu'**un rapport d'un couple d'inertie de masse (M₁) dans la première voie de transfert de couple (20) à un couple d'inertie de masse (M₂) dans la deuxième voie de transfert de couple (22) est dans une plage de 2 à 20.

22. Module d'entraînement hybride, comprenant un agencement d'amortissement des oscillations de torsion (10) selon l'une quelconque des revendications 1 à 21.

23. Agencement de couplage hydrodynamique, en particulier convertisseur de couple hydrodynamique, comprenant un agencement d'amortissement des oscillations de torsion (10) selon l'une quelconque des revendications 1 à 21.

24. Système d'entraînement pour un véhicule, comprenant un groupe motopropulseur et un agencement d'amortissement des oscillations de torsion (10) selon l'une quelconque des revendications 1 à 21, la zone d'entrée (16) pouvant être entraînée par un arbre d'entraînement (44) du groupe motopropulseur en vue d'une rotation autour de l'axe de rotation (A).

25. Système d'entraînement selon la revendication 2 et la revendication 24, **caractérisé en ce qu'**un point de résonance du premier système d'oscillation (32) est en dessous ou proche du régime de marche à vide du groupe motopropulseur.

26. Système d'entraînement selon la revendication 4 et la revendication 24 ou 25, **caractérisé en ce qu'**un point de résonance du deuxième système d'oscillation (36) est au-dessus ou proche du régime maximal du groupe motopropulseur.
